# EUROPÄISCHE PATENTSCHRIFT

(11) **EP 3 113 449 B1**
(45) Veröffentlichungstag und Bekanntmachung des Hinweises auf die Patenterteilung: **23.09.2020**
(21) Anmeldenummer: 15174901.7
(22) Anmeldetag: 01.07.2015
(51) Int. Cl.: H04L 29/08

(54) **VERFAHREN ZUR VERBESSERTEN LASTVERTEILUNG BEZÜGLICH DER BEREITSTELLUNG EINES NETZWERKDIENSTES IN EINEM COMPUTERNETZWERK, SYSTEM ZUR VERBESSERTEN LASTVERTEILUNG BEZÜGLICH DER BEREITSTELLUNG EINES NETZWERKDIENSTES IN EINEM COMPUTERNETZWERK, PROGRAMM UND COMPUTERPROGRAMMPRODUKT**
METHOD FOR IMPROVED LOAD DISTRIBUTION RELATING TO THE PROVISION OF A NETWORK SERVICE IN A COMPUTER NETWORK, SYSTEM FOR IMPROVED LOAD DISTRIBUTION RELATING TO THE PROVISION OF A NETWORK SERVICE IN A COMPUTER NETWORK, PROGRAM AND COMPUTER PROGRAM PRODUCT
PROCÉDÉ DE RÉPARTITION DE CHARGE AMÉLIORÉE CONCERNANT LA MISE À DISPOSITION D'UN SERVICE DE RÉSEAU DANS UN RÉSEAU INFORMATIQUE, SYSTÈME DE RÉPARTITION DE CHARGE AMÉLIORÉE CONCERNANT LA MISE À DISPOSITION D'UN SERVICE DE RÉSEAU DANS UN RÉSEAU INFORMATIQUE, PROGRAMME ET PRODUIT DE PROGRAMME INFORMATIQUE

(43) Veröffentlichungstag der Anmeldung: 04.01.2017
(73) Patentinhaber: Deutsche Telekom AG, 53113 Bonn (DE)
(72) Erfinder: SIVCHENKO, Dmitry, 64331 Weiterstadt (DE)
(74) Vertreter: Schwöbel, Thilo K.

(56) Entgegenhaltungen:
- US-A1- 2010 030 914
- US-B1- 8 606 938
- GULBRANDSEN TROLL TECHNOLOGIES P VIXIE INTERNET SOFTWARE CONSORTIUM L ESIBOV MICROSOFT CORP A: "A DNS RR for specifying the location of services (DNS SRV); rfc2782.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1. Februar 2000 (2000-02-01), XP015008565, ISSN: 0000-0003

## Beschreibung

### STAND DER TECHNIK

Die vorliegende Erfindung betrifft ein Verfahren zur verbesserten Lastverteilung bezüglich der Bereitstellung eines Netzwerkdienstes in einem Computernetzwerk, wobei das Computernetzwerk mehrere Server zur Bereitstellung des Netzwerkdienstes an ein Client-Gerät umfasst, wobei die mehreren Server mehrere Primärserver umfassen, wobei die mehreren Server wenigstens einen Sekundärserver zur Ausfallsicherung umfassen.

Weiterhin betrifft die vorliegende Erfindung ein System zur verbesserten Lastverteilung bezüglich der Bereitstellung eines Netzwerkdienstes in einem Computernetzwerk, wobei das System das Computernetzwerk und ein Client-Gerät umfasst, wobei das Computernetzwerk mehrere Server zur Bereitstellung des Netzwerkdienstes an ein Client-Gerät umfasst, wobei die mehreren Server mehrere Primärserver umfassen, wobei die mehreren Server wenigstens einen Sekundärserver zur Ausfallsicherung umfassen.

Ferner betrifft die vorliegende Erfindung ein Computerprogramm und ein Computerprogrammprodukt.

Das Domain Name System (DNS) Protokoll stellt eine Möglichkeit bereit, in einem Internet Protokoll (IP) basierten Computernetzwerk eine Lastverteilung bezüglich der Bereitstellung eines Netzwerkdienstes und eine Ausfallsicherung zu realisieren. Das Domain Name System (DNS) stellt Service Resource Record (SRV) Datensätze zum Zwecke der Lastverteilung und Ausfallsicherung bereit. Die Service Resource Record (SRV) Datensätze enthalten mehrere Einträge, wobei jeder Eintrag zu einem (angefragten) Netzwerkdienst - neben verschiedenen weiteren Datenfeldern (beispielsweise die Netzwerkadresse oder der Hostname des den angefragten Netzwerkdienst bereitstellenden Servers) - einen Priorisierungswert (welcher auch als "Priorität" bezeichnet wird) und einen Lastverteilungswert (welcher auch als "Gewicht" bezeichnet wird) umfasst. Durch die Service Resource Record (SRV) Datensätze kann mit Hilfe dieser Informationen in einem Domain Name System (DNS) eine Lastverteilung und Ausfallsicherung (durch Implementierung redundanter Server) realisiert werden.

Nachteilig bei solchermaßen implementierten Verfahren zur Lastverteilung ist das mögliche Auftreten einer Überlastungssituation eines Servers, wenn es sich um den vorletzten verfügbaren Server einer Gruppe von einen bestimmten Netzwerkdienst bereitstellenden Servern mit demselben Priorisierungswert handelt - d.h. wenn beispielsweise alle anderen Server dieser Gruppe ausgefallen sind, sodass eine Verschlechterung der Dienstgüte des Netzwerkdienstes herbeigeführt wird und/oder der überlastete Server ebenfalls ausfällt.

### OFFENBARUNG DER ERFINDUNG

Eine Aufgabe der vorliegenden Erfindung ist das Bereitstellen eines Verfahrens zur verbesserten Lastverteilung bezüglich der Bereitstellung eines Netzwerkdienstes in einem Computernetzwerk, durch das eine Verschlechterung der Dienstgüte und/oder der Ausfall eines Servers einer Gruppe von Servern mit demselben Priorisierungswert - insbesondere bei einem zugleich vergleichsweise geringen Konfigurationsaufwand - vermieden wird.

Die Aufgabe der vorliegenden Erfindung wird durch ein Verfahren zur verbesserten Lastverteilung bezüglich der Bereitstellung eines Netzwerkdienstes in einem Computernetzwerk gelöst, wobei das Computernetzwerk mehrere Server zur Bereitstellung des Netzwerkdienstes an ein Client-Gerät umfasst, wobei die mehreren Server mehrere Primärserver umfassen, wobei die mehreren zusätzlich zu den mehreren Primärservern wenigstens einen Sekundärserver zur Ausfallsicherung umfassen, wobei die mehreren Primärserver eine Gruppe von Servern mit demselben Priorisierungswert darstellen, wobei das Computernetzwerk einen Domain Name System (DNS) Server zur Bereitstellung von Service Resource Record (SRV) Datensätzen aufweist, wobei die Service Resource Record (SRV) Datensätze Lastverteilungsdaten und Priorisierungsdaten einschließlich des genannten Priorisierungswerts für die mehreren Primärserver und eines Ausfallssicherungspriorisierungswerts für den mindestens einen Sekundärserver aufweisen, wobei das Client-Gerät mit dem Computernetzwerk zur Verwendung des Netzwerkdienstes verbunden ist, wobei das Verfahren folgende Schritte umfasst:
-- Ermitteln, durch das Client-Gerät, eines ersten Servers, wobei der erste Server in Abhängigkeit der Lastverteilungsdaten der Service Resource Record (SRV) Datensätze aus den mehreren Primärservern selektiert wird,
-- Bereitstellen - für den Fall, dass der erste Server für die Bereitstellung des Netzwerkdienstes an das Client-Gerät verfügbar ist - des Netzwerkdienstes an das Client-Gerät durch den ersten Server, wobei das Verfahren dadurch gekennzeichnet ist, dass das Verfahren die folgenden Schritte weiter umfasst:
   - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - Ermitteln, durch das Client-Gerät, eines zweiten Servers aus dem wenigstens einen Sekundärserver, wobei der zweite Server in Abhängigkeit der Lastverteilungsdaten der Service Resource Record (SRV) Datensätze aus dem wenigstens einen Sekundärserver ermittelt wird, wobei - falls der zweite Server für eine Dienstnutzung durch das Client-Gerät verfügbar ist - der Netzwerkdienst dem Client-Gerät durch den zweiten Server bereitgestellt wird.

Dadurch ist es gemäß der vorliegenden Erfindung in vorteilhafter Weise möglich, dass eine Verschlechterung der Dienstgüte und/oder der weitere Ausfall eines (weiteren) Servers einer Gruppe von Servern mit demselben Priorisierungswert (insbesondere nachdem bereits ein erster Server dieser Gruppe von Servern mit demselben Priorisierungswert ausgefallen ist) dadurch vermieden wird, dass der zweite Server aus dem wenigstens einen Sekundärserver ermittelt wird. Die mehreren Server sind dabei zur Bereitstellung des Netzwerkdienstes an das Client-Gerät konfiguriert und umfassen neben den mehreren Primärservern darüber hinaus den wenigstens einen Sekundärserver zur Ausfallsicherung. Somit wird - für den Fall, dass der erste Server (ein Primärserver) für die Bereitstellung des Netzwerkdienstes an das Client-Gerät ausfällt und ein weiterer Primärserver für die Bereitstellung des Netzwerkdienstes verfügbar ist - der zweite Server (d.h. ein Sekundärserver) in Abhängigkeit der Lastverteilungsdaten der Service Resource Record (SRV) Datensätze aus dem wenigstens einen Sekundärserver ermittelt. Das bedeutet insbesondere, dass ein Ausfallsicherungsserver des wenigstens einen Sekundärservers (d.h. insbesondere der zweite Server) nicht erst dann zur Auswahl als Ersatzserver (für den ausgefallenen ersten Server) zur Verfügung steht, wenn alle Primärserver für die Bereitstellung des Netzwerkdienstes an das Client-Gerät ausgefallen sind, sondern bereits dann zur Auswahl als Ersatzserver für den ausgefallenen Primärserver zur Verfügung steht, wenn noch wenigstens ein anderer Primärserver der mehreren Primärserver für die Bereitstellung des Netzwerkdienstes an das Client-Gerät verfügbar sind.

Gemäß der vorliegenden Erfindung ist es insbesondere vorgesehen, dass in vorteilhafter Weise die übrigen Server der mehreren Server - aus denen ein Ersatzserver (für den ausgefallenen ersten Server) in Abhängigkeit von Ausfallpriorisierungsdaten der Service Resource Record (SRV) Datensätze ermittelt wird - die mehreren Primärserver - zumindest mit Ausnahme des für die Bereitstellung des Netzwerkdienstes an das Client-Gerät ausgefallenen ersten Servers - und den wenigstens einen Sekundärserver und insbesondere weitere Ausfallsicherungsserver umfassen.

Gemäß der vorliegenden Erfindung ist es in vorteilhafter Weise vorgesehen, dass eine Ermittlung eines Servers durch das Client-Gerät ein Zugreifen auf die (in dem Client-Gerät gespeicherten) Service Resource Record (SRV) Datensätze umfasst.

Gemäß der vorliegenden Erfindung ist es insbesondere vorgesehen, dass das eine Client-Gerät zugleich auch wenigstens ein Client-Gerät ist - d.h. genau ein Client-Gerät oder mehrere Client-Geräte umfasst. Insbesondere für den Fall, dass es sich um mehrere Client-Geräte handelt, geben die Verfahrensschritte gemäß dem Verfahren der vorliegenden Erfindung die logische Abfolge der Verfahrensschritte für genau ein Client-Gerät der mehreren Client-Geräte vor, wobei die zeitliche Abfolge der Verfahrensschritte unterschiedlicher Client-Geräte auch unterschiedlich sein kann. Insbesondere erfolgt die Ermittlung eines Servers, um den durch den ermittelten Server bereitgestellten Netzwerkdienst durch das Client-Gerät zu verwenden.

Gemäß der vorliegenden Erfindung ist es insbesondere vorgesehen, dass "für den Fall, dass ein Server für die Bereitstellung des Netzwerkdienstes an das wenigstens eine Client-Gerät ausfällt" bedeutet, dass der Server für die Bereitstellung des Netzwerkdienstes an das wenigstens eine Client-Gerät unverfügbar ist - d.h. beispielsweise, dass ein existierender Server ausfällt oder ein Zielserver (gemäß dem Datenfeld "target") in den Service Resource Record (SRV) Datensätzen (welche in dem Client-Gerät gespeichert sind) nicht oder nicht mehr existiert oder fehlerhaft bezeichnet ist.

Gemäß der vorliegenden Erfindung ist es insbesondere vorgesehen, dass - für den Fall, dass der erste Server für die Bereitstellung des Netzwerkdienstes an das Client-Gerät verfügbar ist - das Verfahren ferner folgende Schritte umfasst:
-- Ermitteln, durch das Client-Gerät, eines weiteren ersten Servers, wobei der weitere erste Server in Abhängigkeit der (auf die Primärserver bezogenen) Lastverteilungsdaten der Service Resource Record (SRV) Datensätze aus den mehreren Primärservern selektiert wird,
-- Bereitstellen - für den Fall, dass der weitere erste Server für die Bereitstellung des Netzwerkdienstes an das Client-Gerät verfügbar ist - des Netzwerkdienstes an das Client-Gerät durch den weiteren ersten Server, sowie - für den Fall, dass der weitere erste Server für die Bereitstellung des Netzwerkdienstes an das Client-Gerät ausfällt - Ermitteln, durch das Client-Gerät, eines weiteren zweiten Servers, wobei der weitere zweite Server in Abhängigkeit der Priorisierungsdaten der Service Resource Record (SRV) Datensätze aus den übrigen Servern der mehreren Server - d.h. insbesondere aus den mehreren Servern mit Ausnahme des weiteren ersten Servers - ermittelt wird, wobei - falls der weitere zweite Server für eine Dienstnutzung durch das Client-Gerät verfügbar ist - der Netzwerkdienst dem Client-Gerät durch den weiteren zweiten Server bereitgestellt wird.

Gemäß der vorliegenden Erfindung ist es in vorteilhafter Weise vorgesehen, dass der zweite Server bzw. der weitere zweite Server - für den Fall, dass der erste bzw. der weitere erste Server für die Bereitstellung des Netzwerkdienstes an das Client-Gerät ausfällt - in Abhängigkeit eines auf den ersten Server bzw. weiteren ersten Server bezogenen Ausfallpriorisierungswertes, in Abhängigkeit der auf die Primärserver bezogenen Lastverteilungsdaten und in Abhängigkeit der auf den wenigstens einen Sekundärserver bezogenen Lastverteilungsdaten und Priorisierungsdaten der Service Resource Record (SRV) Datensätze ermittelt wird, sodass insbesondere der auf den ersten Server bzw. weiteren ersten Server bezogene Ausfallpriorisierungswert mit dem auf den zweiten Server bezogenen Priorisierungswert gleichrangig ist.

Gemäß einer bevorzugten Ausführungsform der vorliegenden Erfindung ist es vorgesehen, dass der wenigstens eine Sekundärserver aus den mehreren Servern in Abhängigkeit eines Ausfallpriorisierungswertes der Service Resource Record (SRV) Datensätze bestimmt wird.

Dadurch ist es gemäß der vorliegenden Erfindung in vorteilhafter Weise möglich, dass - insbesondere zum Ermitteln des zweiten Servers in Abhängigkeit der Lastverteilungsdaten der Service Resource Record (SRV) Datensätze aus dem wenigstens einen Sekundärserver - der wenigstens eine Sekundärserver aus den mehreren Servern in Abhängigkeit eines Ausfallpriorisierungswertes der Service Resource Record (SRV) Datensätze bestimmt wird. Dadurch wird insbesondere vorrangig (d.h. vorrangig vor den Primärservern, insbesondere auch dann, wenn noch wenigstens ein weiterer Primärserver verfügbar ist) ein Sekundärserver gewählt und erst nachrangig (d.h. erst dann, wenn alle Sekundärserver für die Bereitstellung des Netzwerkdienstes ausfallen) ein Primärserver gewählt.

Gemäß einer weiteren bevorzugten Ausführungsform der vorliegenden Erfindung ist es vorgesehen, dass - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - ausschließlich ein Server des wenigstens einen Sekundärservers zur Ausfallsicherung für den ersten Server selektiert wird.

Dadurch ist es gemäß der vorliegenden Erfindung in vorteilhafter Weise möglich, dass sichergestellt wird, dass der zweite Server (oder Ersatzserver für den ausgefallenen Primärserver) ein Ausfallsicherungsserver ist, sodass es durch den für die Bereitstellung des Netzwerkdienstes an das Client-Gerät ausgefallenen ersten (Primär-)Server nicht zu einer erhöhten Belastung der anderen verfügbaren Primärserver kommt. Somit wird in vorteilhafter Weise eine verbesserte Lastverteilung gegenüber dem Stand der Technik dadurch erreicht, dass als zweiter Server ein Ersatzserver aus der Gruppe der (sekundären) Ausfallsicherungsserver ermittelt wird.

Gemäß einer bevorzugten Ausführungsform der vorliegenden Erfindung ist es vorgesehen, dass der wenigstens eine Sekundärserver einen ersten Sekundärserver und einen zweiten Sekundärserver umfasst, wobei - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - der erste Sekundärserver als der zweite Server aus dem wenigstens einen Sekundärserver in Abhängigkeit der auf die Sekundärserver bezogenen Lastverteilungsdaten der Service Resource Record (SRV) Datensätze ermittelt wird.

Dadurch ist es gemäß der vorliegenden Erfindung in vorteilhafter Weise möglich, dass die ursprünglich auf den ausgefallenen ersten Server verteilten Anfragen nach dem Netzwerkdienst auf mehrere Sekundärserver aufgeteilt werden, sodass der zweite Server gegenüber dem ausgefallenen ersten Server eine geringere Netzwerklast verarbeiten muss. Dadurch können Serverressourcen eingespart werden und dennoch eine vergleichsweise hohe Verfügbarkeit realisiert werden.

Gemäß einer bevorzugten Ausführungsform der vorliegenden Erfindung ist es vorgesehen, dass der erste Server aus den mehreren Primärservern in Abhängigkeit der auf die mehreren Primärserver bezogenen Lastverteilungsdaten der Service Resource Record (SRV) Datensätze ermittelt wird, wobei - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist und der zweite Server für eine Dienstnutzung durch das Client-Gerät verfügbar ist- der Netzwerkdienst dem Client-Gerät durch den zweiten Server derart bereitgestellt wird, dass ein Anteil von Netzwerkdienstanfragen des Client-Geräts durch den zweiten Server verarbeitet wird, wobei der Anteil in Abhängigkeit eines auf den ersten Server bezogenen Lastverteilungswert bestimmt wird, wobei der Anteil insbesondere in Abhängigkeit einer Multiplikation des auf den ersten Server bezogenen Lastverteilungswertes mit einem auf den zweiten Server bezogenen Lastverteilungswert bestimmt wird.

Dadurch ist es gemäß der vorliegenden Erfindung in vorteilhafter Weise möglich, dass bereits dann, wenn nur der erste Server ausfällt - aber insbesondere noch wenigstens ein weiterer Primärserver verfügbar ist - nur die ursprünglich an den ausgefallenen Primärserver gerichteten Anfragen auf die Sekundärserver bzw. Ausfallsicherungsserver gemäß den Lastverteilungsdaten umverteilt werden, die den Sekundärservern zugeordnet sind. Dadurch werden in vorteilhafterweise alle Server mit weniger als 100% der Anfragen belastet, solange wenigstens zwei Server zur Bereitstellung des Netzwerkdienstes an das Client-Gerät verfügbar sind.

Gemäß einer bevorzugten Ausführungsform der vorliegenden Erfindung ist es vorgesehen, dass die Service Resource Record (SRV) Datensätze Priorisierungsdaten, Lastverteilungsdaten und Ausfallpriorisierungsdaten umfassen, wobei jeweils ein Eintrag der Service Resource Record (SRV) Datensätze einem Server der mehreren Server zugeordnet sind, wobei jeder Eintrag jeweils einen Priorisierungswert der Priorisierungsdaten, einen Lastverteilungswert der Lastverteilungsdaten und einen Ausfallpriorisierungswert der Ausfallpriorisierungsdaten umfassen, wobei der erste Server in Abhängigkeit eines ersten Priorisierungswertes und eines ersten Lastverteilungswertes eines dem ersten Server zugeordneten ersten Eintrags ermittelt wird und - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - der zweite Server in Abhängigkeit eines ersten Ausfallpriorisierungswertes des ersten Eintrags ermittelt wird.

Dadurch ist es gemäß der vorliegenden Erfindung in vorteilhafter Weise möglich, dass der Konfigurationsaufwand vergleichsweise gering gehalten werden kann, der erforderlich ist, um eine Verschlechterung der Dienstgüte und/oder der Ausfall eines Servers der Gruppe von Servern mit demselben Priorisierungswert vermieden wird.

Gemäß einer bevorzugten Ausführungsform der vorliegenden Erfindung ist es vorgesehen, dass - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - als zweiter Server ein Server ermittelt wird, dem in einem zweiten Eintrag der Service Resource Record (SRV) Datensätze ein zweiter Priorisierungswert zugeordnet ist, der einem dem ersten Server zugeordneten ersten Ausfallpriorisierungswert der Service Resource Record (SRV) Datensätze gleichrangig ist.

Dadurch ist es gemäß der vorliegenden Erfindung in vorteilhafter Weise möglich, dass der Konfigurationsaufwand vergleichsweise gering gehalten werden kann, der erforderlich ist, um eine Verschlechterung der Dienstgüte und/oder der Ausfall eines Servers der Gruppe von Servern mit demselben Priorisierungswert vermieden wird, wobei die erfindungsgemäß verbesserte Lastverteilung insbesondere mit vergleichsweise geringem Konfigurationsaufwand erreicht wird, indem das Domain Name System (DNS) Protokoll um ein zusätzliches Datenfeld pro Eintrag erweitert wird. Das zusätzliche Datenfeld wird insbesondere als Ausfallpriorisierungswert und die Gesamtheit der Ausfallpriorisierungswerte aller Einträge der Service Resource Record (SRV) Datensätze auch als Ausfallpriorisierungsdaten bezeichnet.

Gemäß einer bevorzugten Ausführungsform der vorliegenden Erfindung ist es vorgesehen, dass - für den Fall, dass der erste Server für die Bereitstellung des Netzwerkdienstes an das Client-Gerät ausfällt und alle Sekundärserver - denen in den Service Resource Record Datensätzen insbesondere ein Priorisierungswert zugeordnet ist, der zu dem ersten Ausfallpriorisierungswert des ersten Servers gleichrangig ist - für die Bereitstellung des Netzwerkdienstes an das Client-Gerät ausfallen -zur Ausfallsicherung für den ausgefallenen ersten Server ein weiterer erster Server aus den mehreren Primärservern ermittelt wird, dessen Priorisierungswert insbesondere mit dem ersten Priorisierungswert des ersten Servers gleichrangig ist.

Dadurch ist es gemäß der vorliegenden Erfindung in vorteilhafter Weise möglich, dass als Ersatzserver für den ausgefallenen ersten Server vorrangig Sekundärserver (d.h. Server mit einem Priorisierungswert, der mit dem Ausfallpriorisierungswert des ausgefallenen ersten Servers gleichrangig ist) und erst nachrangig - d.h. für den Fall, dass alle Sekundärserver für die Bereitstellung des Netzwerkdienstes ausgefallen sind - ein anderer noch verfügbarer Primärserver verwendet wird. Dadurch wird eine gegenüber dem Stand der Technik verbesserte Lastverteilung erreicht.

Gemäß einer bevorzugten Ausführungsform der vorliegenden Erfindung ist es vorgesehen, dass - für den Fall, dass der erste Server für die Bereitstellung des Netzwerkdienstes an das Client-Gerät ausfällt und alle Sekundärserver - insbesondere mit einem zu dem ersten Ausfallpriorisierungswert des ersten Servers gleichrangigen Priorisierungswert - für die Bereitstellung des Netzwerkdienstes an das Client-Gerät ausfallen und alle weiteren Primärserver - insbesondere mit einem zu dem ersten Priorisierungswert des ersten Servers gleichrangigen Priorisierungswert - für die Bereitstellung des Netzwerkdienstes an das Client-Gerät ausfallen -zur Ausfallsicherung für den ausgefallenen ersten Server ein Tertiärserver der mehreren Server ermittelt wird, dessen Priorisierungswert insbesondere gegenüber dem ersten Ausfallpriorisierungswert des ersten Servers nachrangig ist

Dadurch ist es gemäß der vorliegenden Erfindung in vorteilhafter Weise möglich, dass neben einer verbesserten Lastverteilung auch eine verbesserte Ausfallsicherung erreicht werden kann, indem die Tertiärserver erst dann eingesetzt werden, wenn alle Primärserver und Sekundärserver ausgefallen sind.

Weiterhin betrifft die vorliegende Erfindung ein System zur Lastverteilung bei der Bereitstellung eines Netzwerkdienstes in einem Computernetzwerk, wobei das System das Computernetzwerk und ein Client-Gerät umfasst, wobei das Computernetzwerk mehrere Server zur Bereitstellung des Netzwerkdienstes an das Client-Gerät umfasst, wobei die mehreren Server mehrere Primärserver umfassen, wobei die mehreren Server zusätzlich zu den mehreren Primärservern wenigstens einen Sekundärserver zur Ausfallsicherung umfassen, wobei die mehreren Primärserver eine Gruppe von Servern mit demselben Priorisierungswert darstellen, wobei das Computernetzwerk einen Domain Name System (DNS) Server zur Bereitstellung von Service Resource Record (SRV) Datensätzen aufweist, wobei die Service Resource Record (SRV) Datensätze Lastverteilungsdaten und Priorisierungsdaten einschließlich des genannten Priorisierungswerts für die mehreren Primärserver und eines Ausfallssicherungspriorisierungswerts für den mindestens einen Sekundärserver aufweisen, wobei das Client-Gerät mit dem Computernetzwerk zur Verwendung des Netzwerkdienstes verbunden ist, wobei das Client-Gerät zum Ermitteln eines ersten Servers konfiguriert ist, wobei das Client-Gerät konfiguriert ist, den ersten Server in Abhängigkeit der Lastverteilungsdaten der Service Resource Record (SRV) Datensätze aus den mehreren Primärservern zu selektieren, wobei das System derart konfiguriert ist, dass - für den Fall, dass der erste Server für die Bereitstellung des Netzwerkdienstes an das Client-Gerät verfügbar ist - der Netzwerkdienst an das Client-Gerät durch den ersten Server bereitgestellt wird
wobei das System dadurch gekennzeichnet ist, dass das System derart konfiguriert ist, dass:
- für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - durch das Client-Gerät ein zweiter Server aus dem wenigstens einen Sekundärserver ermittelt wird, wobei das Client-Gerät derart konfiguriert ist, dass der zweite Server in Abhängigkeit der Lastverteilungsdaten der Service Resource Record (SRV) Datensätze aus dem wenigstens einen Sekundärserver ermittelt wird, wobei das System derart konfiguriert ist, dass - für den Fall, dass der zweite Server für eine Dienstnutzung durch das Client-Gerät verfügbar ist - der Netzwerkdienst dem Client-Gerät durch den zweiten Server bereitgestellt wird.

Dadurch ist es gemäß der vorliegenden Erfindung in vorteilhafter Weise möglich, dass ein System mit einem Computernetzwerk und einem Clientgerät bereitgestellt wird, welches derart konfiguriert ist, dass eine Verschlechterung der Dienstgüte und/oder ein Ausfall eines Servers einer Gruppe von Servern mit demselben Priorisierungswert dadurch vermieden wird, dass der zweite Server aus dem wenigstens einen Sekundärserver ermittelt wird. Die mehreren Server sind dabei zur Bereitstellung des Netzwerkdienstes an das Client-Gerät konfiguriert und umfassen neben den mehreren Primärservern darüber hinaus den wenigstens einen Sekundärserver zur Ausfallsicherung. Somit wird - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - der zweite Server in Abhängigkeit der Lastverteilungsdaten der Service Resource Record (SRV) Datensätze aus dem wenigstens einen Sekundärserver ermittelt. Das bedeutet insbesondere, dass das System derart konfiguriert ist, dass ein Ausfallsicherungsserver des wenigstens einen Sekundärservers (d.h. insbesondere der Sekundärserver) nicht erst dann zur Auswahl als Ersatzserver zur Verfügung steht, wenn alle Primärserver für die Bereitstellung des Netzwerkdienstes an das Client-Gerät ausgefallen sind, sondern bereits dann zur Auswahl als Ersatzserver für den ausgefallenen Primärserver zur Verfügung steht, wenn noch wenigstens ein anderer Primärserver der mehreren Primärserver für die Bereitstellung des Netzwerkdienstes an das Client-Gerät verfügbar sind.

Gemäß einer bevorzugten Ausführungsform der vorliegenden Erfindung ist es vorgesehen, dass das System derart konfiguriert ist, dass - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - ausschließlich ein Server des wenigstens einen Sekundärservers zur Ausfallsicherung für den ersten Server selektiert wird.

Dadurch ist es gemäß der vorliegenden Erfindung in vorteilhafter Weise möglich, dass durch das erfindungsgemäße System sichergestellt wird, dass der zweite Server (oder Ersatzserver für den ausgefallenen Primärserver) ein Ausfallsicherungsserver ist, sodass ein Ausfall des für die Bereitstellung des Netzwerkdienstes an das Client-Gerät ursprünglich vorgesehenen ersten (Primär-)Servers nicht zu einer erhöhten Belastung der anderen verfügbaren Primärserver führt. Somit wird in vorteilhafter Weise eine verbesserte Lastverteilung in dem System gegenüber dem Stand der Technik dadurch erreicht, dass als zweiter Server ein Ersatzserver aus der Gruppe der Ausfallsicherungsserver ermittelt wird.

Gemäß einer bevorzugten Ausführungsform der vorliegenden Erfindung ist es vorgesehen, dass der wenigstens eine Sekundärserver einen ersten Sekundärserver und einen zweiten Sekundärserver umfasst, wobei das Client-Gerät derart konfiguriert ist, dass - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist - der erste Sekundärserver als der zweite Server aus dem wenigstens einen Sekundärserver in Abhängigkeit der auf die Sekundärserver bezogenen Lastverteilungsdaten der Service Resource Record (SRV) Datensätze ermittelt wird.

Dadurch ist es gemäß der vorliegenden Erfindung in vorteilhafter Weise möglich, ein System bereitzustellen, bei dem die ursprünglich auf den ausgefallenen ersten Server verteilten Anfragen des Client-Geräts auf mehrere Ausfallsicherungsserver aufgeteilt werden, sodass der zweite Server gegenüber dem ausgefallenen ersten Server eine geringere Netzwerklast zu verarbeiten hat. Dadurch können Serverressourcen eingespart werden und dennoch eine vergleichsweise hohe Verfügbarkeit realisiert werden.

Gemäß einer bevorzugten Ausführungsform der vorliegenden Erfindung ist es vorgesehen, dass das Client-Gerät derart konfiguriert ist, dass der erste Server aus den mehreren Primärservern in Abhängigkeit der auf die mehreren Primärserver bezogenen Lastverteilungsdaten der Service Resource Record (SRV) Datensätze ermittelt wird, wobei das Client-Gerät derart konfiguriert ist, dass - für den Fall, dass der erste Server für die Bereitstellung des Netzwerkdienstes an das Client-Gerät ausfällt und ein weiterer Server der mehreren Primärserver für die Bereitstellung des Netzwerkdienstes an das Client-Gerät verfügbar ist und der zweite Server für eine Dienstnutzung durch das Client-Gerät verfügbar ist - der Netzwerkdienst dem Client-Gerät durch den zweiten Server derart bereitgestellt wird, dass ein Anteil von Netzwerkdienstanfragen des Client-Geräts durch den zweiten Server verarbeitet wird, wobei der Anteil in Abhängigkeit eines auf den ersten Server bezogenen Lastverteilungswert bestimmt wird, wobei der Anteil insbesondere in Abhängigkeit einer Multiplikation des auf den ersten Server bezogenen Lastverteilungswertes mit einem auf den zweiten Server bezogenen Lastverteilungswert bestimmt wird.

Dadurch ist es gemäß der vorliegenden Erfindung in vorteilhafter Weise möglich, dass das System derart konfiguriert ist, dass bereits dann, wenn nur der erste Server ausfällt - aber insbesondere noch wenigstens ein weiterer Primärserver verfügbar ist - nur die ursprünglich an den ausgefallenen Primärserver gerichteten Anfragen auf die Sekundärserver bzw. Ausfallsicherungsserver gemäß den Lastverteilungsdaten umverteilt werden, die den Sekundärservern zugeordnet sind. Dadurch werden in vorteilhafterweise alle Server mit weniger als 100% der Anfragen belastet, solange wenigstens zwei Server zur Bereitstellung des Netzwerkdienstes an das Client-Gerät verfügbar sind.

Ferner betrifft die vorliegende Erfindung ein Computerprogramm mit einem computerlesbaren Programmcode, mit dessen Hilfe das erfindungsgemäße Verfahren durchführbar ist, wenn der computerlesbare Programmcode auf einer programmierbaren Einrichtung ausgeführt wird.

Ferner betrifft die vorliegende Erfindung ein Computerprogrammprodukt mit einem auf einem Speichermedium gespeicherten erfindungsgemäßen Computerprogramm, mit dessen Hilfe ein erfindungsgemäßes Verfahren durchführbar ist, wenn der computerlesbare Programmcode auf einer programmierbaren Einrichtung ausgeführt wird.

Diese und weitere Eigenschaften, Merkmale und Vorteile der vorliegenden Erfindung werden aus der folgenden detaillierten Beschreibung, in Verbindung mit den beigefügten Zeichnungen, welche beispielhaft die Grundlagen der Erfindung veranschaulichen, offensichtlich. Die Beschreibung dient lediglich als Beispiel, ohne Einschränkung des Umfangs der Erfindung. Die unten zitierten Bezugszeichen beziehen sich auf die angehängten Zeichnungen.

### KURZE BESCHREIBUNG DER ZEICHNUNGEN

**Figur 1** veranschaulicht schematisch ein System zur Lastverteilung bezüglich der Bereitstellung eines Netzwerkdienstes in einem Computernetzwerk gemäß der vorliegenden Erfindung.
**Figur 2** veranschaulicht schematisch ein System zur Lastverteilung bezüglich der Bereitstellung eines Netzwerkdienstes in einem Computernetzwerk.
**Figur 3** veranschaulicht schematisch ein System zur verbesserten Lastverteilung bezüglich der Bereitstellung eines Netzwerkdienstes in einem Computernetzwerk gemäß der vorliegenden Erfindung.
**Figur 4** veranschaulicht schematisch ein System zur verbesserten Lastverteilung bezüglich der Bereitstellung eines Netzwerkdienstes in einem Computernetzwerk gemäß der vorliegenden Erfindung.
**Figur 5** veranschaulicht schematisch ein System zur verbesserten Lastverteilung bezüglich der Bereitstellung eines Netzwerkdienstes in einem Computernetzwerk gemäß der vorliegenden Erfindung.

### AUSFÜHRUNGSFORM(EN) DER ERFINDUNG

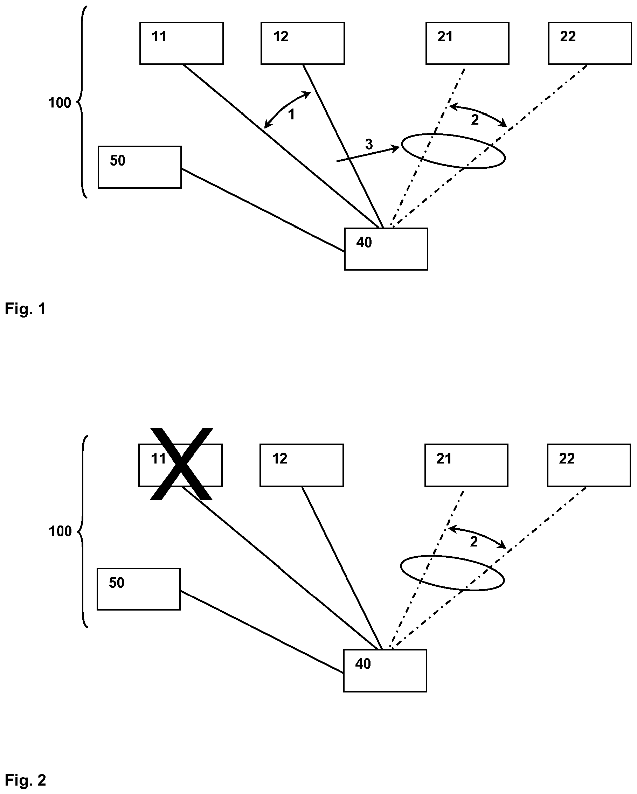

In Figur 1 ist ein System zur Lastverteilung bezüglich der Bereitstellung eines Netzwerkdienstes in einem Computernetzwerk 100 gemäß der vorliegenden Erfindung schematisch veranschaulicht. Das System umfasst das Computernetzwerk 100 und ein Client-Gerät 40. Das Client-Gerät 40 ist mit dem Computernetzwerk 100 verbunden, wobei der in dem Computernetzwerk 100 bereitgestellte Netzwerkdienst durch das Client-Gerät 40 genutzt wird.

Das Computernetzwerk 100 umfasst mehrere Server 11, 12, 21, 22 zur Bereitstellung des Netzwerkdienstes an das Client-Gerät 40, wobei die mehreren Server 11, 12, 21, 22 sowohl mehrere Primärserver 11, 12, als auch wenigstens einen Sekundärserver 21, 22 zur Ausfallsicherung umfassen. In Figur 1 sind zwei Primärserver 11, 12 der mehreren Primärserver und zwei Sekundärserver 21, 22 des wenigstens einen Sekundärservers 21, 22 gezeigt.

Ferner umfasst das Computernetzwerk 100 einen Domain Name System (DNS) Server 50 zur Bereitstellung von Service Resource Record (SRV) Datensätzen. Die Service Resource Record (SRV) Datensätze enthalten insbesondere mehrere Einträge, wobei jeder Eintrag (bzw. Datensatz) zu dem Netzwerkdienst - neben verschiedenen weiteren Datenfeldern (welche beispielsweise die Netzwerkadresse oder den Hostname des den Netzwerkdienst bereitstellenden Servers umfassen) - einen Priorisierungswert (welcher auch als "Priorität" bezeichnet wird) und einen Lastverteilungswert (welcher auch als "Gewicht" bezeichnet wird) aufweisen. Hier wird die Gesamtheit der Priorisierungswerte der mehreren Einträge der Service Resource Record (SRV) Datensätze auch als Priorisierungsdaten bezeichnet und entsprechend die Gesamtheit der Lastverteilungswerte auch als Lastverteilungsdaten bezeichnet.

Gemäß einer bevorzugten Ausführungsform der vorliegenden Erfindung umfassen die Service Resource Record (SRV) Datensätze mehrere Einträge, wobei ein Eintrag der Service Resource Record (SRV) Datensätze insbesondere den folgenden Aufbau besitzt:
"_service._proto.name. TTL class SRV priority weight port target.".

Gemäß einer bevorzugten Ausführungsform der vorliegenden Erfindung umfasst jeder Eintrag der Service Resource Record (SRV) Datensätze jeweils wenigstens die folgenden Datenfelder:
-- service: Der symbolische Name des (angefragten) Netzwerkdienstes,
-- proto: Das Transportprotokoll des (angefragten) Netzwerkdienstes, wobei beispielsweise das Transportprotokoll entweder das Transmission Control Protocol (TCP) oder das User Datagram Protocol (UDP) Netzwerkprotokoll ist,
-- name: Der Domainname für den der Eintrag gültig ist,
-- TTL: Die Gültigkeitsdauer (die insbesondere vorgibt, wie lange der Eintrag in einem Domain Name System (DNS) Cache des Client-Geräts 40 gehalten werden darf),
-- class: Das Klassenfeld, wobei insbesondere "IN" für Internet steht,
-- priority: Der Priorisierungswert (bzw. "Priorität"), welcher einem im Datenfeld "target" bezeichneten Server (oder Host) - welcher auch als Zielserver bezeichnet wird - zugeordnet ist,
-- weight: Der Lastverteilungswert (bzw. "Gewicht"), der gemäß der vorliegenden Erfindung insbesondere ein relatives (Wahrscheinlichkeits-)Gewicht für Einträge mit derselben Priorität spezifiziert, wobei insbesondere Lastverteilungswerte mit höherem Zahlenwert insbesondere eine proportional höhere Wahrscheinlichkeit gegeben werden soll, durch das Client-Gerät 40 ausgewählt zu werden,
-- port: Der TCP oder UDP Port (des Zielservers), an dem der Netzwerkdienst bereitgestellt wird,
-- target: Der Server (Zielserver), welcher den Netzwerkdienst (welcher im Datenfeld "sevice" bezeichnet ist) im Computernetzwerk 100 bereitstellt bzw. anbietet, wobei es sich bei dem Datenfeld "target" insbesondere um den kanonischen Hostname des Geräts handelt, welches den Netzwerkdienst im Computernetzwerk 100 bereitstellt.

Gemäß der vorliegenden Erfindung ist das Client-Gerät 40 insbesondere derart konfiguriert, dass das Client-Gerät 40 - zu einem gegebenen Netzwerkdienst (beispielsweise ein Session Initiation Protokoll (SIP) Dienst) - versuchen muss, denjenigen Server mit dem niedrigsten Priorisierungswert zu kontaktieren, den das Client-Gerät 40 im Computernetzwerk 100 erreichen kann, wobei insbesondere das Client-Gerät 40 derart konfiguriert ist, dass mehrere Zielserver mit demselben Priorisierungswert (bzw. "priority") in einer Reihenfolge und/oder gemäß einer Häufigkeitsverteilung kontaktiert werden, die in Abhängigkeit des Lastverteilungswert (bzw. das Gewicht oder "weight") ermittelt wird (beispielsweise gibt der Lastverteilungswert die Wahrscheinlichkeit dafür an, dass das Client-Gerät 40 (als nächstes) den (zu dem Eintrag gehörenden) Zielserver aus den verfügbaren Servern mit demselben Priorisierungswert auswählt bzw. ermittelt).

In Figur 1 ist eine beispielhafte Ausführungsform gezeigt, bei welcher die von dem Client-Gerät 40 bei dem Domain Name System (DNS) Server 50 abgerufenen Service Resource Record (SRV) Datensätze einer Zonendatei die folgenden vier Einträge umfassen:
_sip._tcp.example.com. 3600 IN SRV 0 20 5060 server11.example.com
_sip._tcp.example.com. 3600 IN SRV 0 80 5060 server12.example.com
_sip._tcp.example.com. 3600 IN SRV 1 50 5060 server21.example.com
_sip._tcp.example.com. 3600 IN SRV 1 50 5060 server22.example.com

Durch die Service Resource Record (SRV) Datensätze wird dem Client-Gerät 40 die Information übermittelt, dass für den angefragten Netzwerkdienst - hier der Session Initiation Protocol (SIP) Dienst - primär bzw. vorrangig die Server 11 und 12 mit dem niedrigsten Prioritätswert (welcher hier "0" beträgt) zu kontaktieren sind. Daher werden die Server 11 und 12 mit dem niedrigsten Prioritätswert hier als Primärserver 11, 12 bezeichnet. Die Primärserver 11, 12 sind hier TCP Server, wobei jeweils der Port 5060 zu verwenden ist. Gemäß der vorliegenden Erfindung werden die Netzwerkdienstanfragen (hier die SIP-Anfragen) des Client-Geräts 40 auf die beiden Primärserver 11, 12 im Verhältnis gemäß den Lastverteilungswerten verteilt, welche in den Service Resource Record (SRV) Datensätzen den Primärservern 11, 12 mit dem niedrigsten Prioritätswert zugeordnet sind. Hier werden die Netzwerkdienstanfragen im Verhältnis 20:80 auf die beiden Primärserver 11, 12 verteilt. Somit wird eine Lastverteilung auf Basis des Domain Name System (DNS) Protokolls realisiert. Diese Lastverteilungssituation ist in Figur 1 durch den mit Bezugszahl 1 bezeichneten Doppelpfeil illustriert. Für den Fall, dass alle Server mit demselben Priorisierungswert (in diesem Beispiel die beiden Primärserver 11, 12 mit dem Priorisierungswert "0") für die Bereitstellung des Netzwerkdienstes an das Client-Gerät 40 ausfallen, werden diejenigen Server 21, 22 durch das Client-Gerät 40 ermittelt, die einen nachrangigen Priorisierungswert - hier einen höheren Priorisierungswert "1" - besitzen. Dies sind in der in Figur 1 gezeigten beispielhaften Ausführungsform die beiden Sekundärserver 21 und 22. Der mit Bezugszahl 3 bezeichnete Pfeil illustriert den Ausfall aller Primärserver 11, 12 - nicht nur eines einzigen Primärservers. Dabei werden die Netzwerkdienstanfragen (hier die SIP-Anfragen) auf die Sekundärserver 21, 22 (hier die beiden TCP Server 21 und 22) in einem Verhältnis verteilt, welches den in den Service Resource Record (SRV) Datensätzen jeweils den Sekundärservern 21, 22 zugeordneten Lastverteilungswerten entspricht - hier im Verhältnis 50:50. Diese Ausfallsicherung ist in Figur 1 durch den mit Bezugszahl 2 bezeichneten Doppelpfeil illustriert.

In Figur 2 ist ein System zur Lastverteilung bezüglich der Bereitstellung eines Netzwerkdienstes in einem Computernetzwerk schematisch veranschaulicht. Durch das Client-Gerät 40 wird zunächst ein erster Server 11 in Abhängigkeit der Lastverteilungsdaten der Service Resource Record (SRV) Datensätze aus den mehreren Primärservern 11, 12 - d.h. insbesondere aus den Servern 11, 12 mit dem niedrigsten Priorisierungswert - ermittelt. Für den Fall, dass der erste Server 11 für die Bereitstellung des Netzwerkdienstes an das Client-Gerät 40 verfügbar ist, wird der Netzwerkdienst durch den ersten Server 11 an das Client-Gerät 40 bereitgestellt (dieser Fall ist in Figur 2 nicht illustriert). Wenn jedoch der Fall eintritt (siehe Figur 2), dass der erste Server 11 für die Bereitstellung des Netzwerkdienstes an das Client-Gerät 40 ausfällt, wird durch das Client-Gerät 40, ein Ersatzserver als Ersatz für den ausgefallenen ersten Server 11 (beispielsweise der zweite Server 21) ermittelt. Hierbei bedeutet insbesondere, dass der erste Server 11 für die Bereitstellung des Netzwerkdienstes an das Client-Gerät 40 ausfällt, dass der erste Server 11 (zumindest für das Client-Gerät 40) unverfügbar ist - beispielsweise aufgrund eines Serverausfalls oder aufgrund von Änderungen in der Struktur des Computernetzwerkes 100 oder anderer Umstände, die nicht durch die beim Client-Gerät 40 vorhandenen Service Resource Record (SRV) Datensätze abgebildet werden. Die Ermittlung des Ersatzservers erfolgt hier in Abhängigkeit der Priorisierungsdaten der Service Resource Record (SRV) Datensätze.

Insbesondere wenn in dem zuletzt beschriebenen Fall nur noch ein einziger Primärserver 12 - welcher denselben Priorisierungswert wie der ausgefallene erste Server 11 besitzt - verfügbar ist und ausschließlich der verbleibende Primärserver 12 als einziger Server gemäß den Einträgen der Service Resource Record (SRV) Datensätze ausgewählt würde, so würde (in diesem vergleichsweise ungünstigen Fall) der ausgewählte Primärserver 12 als einziger Server zur Bereitstellung des Netzwerkdienstes an das Client-Gerät 40 verwendet werden und somit eine Netzwerklast in Höhe von 100% aller Anfragen durch das Client-Gerät 40 verarbeiten müssen, wobei die Sekundärserver 21, 22 keine Netzwerkdienstanfragen erhalten würden. Erst im Falle eines Ausfalls auch des bis dahin letzten verbliebenen Primärservers 12, würde es in diesem Fall zur Verarbeitung der Anfragen des Client-Geräts 40 durch die Sekundärserver 21, 22 kommen.

Gemäß der vorliegenden Erfindung wird hingegen der Ersatzserver aus den übrigen Servern 12, 21, 22 der mehreren Server 11, 12, 21, 22 ermittelt, welche insbesondere sowohl Primärserver, als auch Ausfallsicherungsserver umfassen. Hier umfassen die übrigen Server 12, 21, 22 die übrigen Primärserver der mehreren Primärserver 12 - d.h. alle verfügbaren Primärserver 12 mit Ausnahme des ausgefallenen ersten Servers 11 - sowie der wenigstens eine Sekundärserver 21, 22 und insbesondere weitere Ausfallsicherungsserver. Hierdurch ist es erfindungsgemäß in vorteilhafter Weise möglich, dass die beschriebene Überlastungssituation des letzten verbliebenen Servers (hier des Primärservers 12) vermieden wird, sodass der Primärserver 12 hier nicht die gesamte Netzwerklast bezüglich der Anfragen durch das Client-Gerät 40 verarbeiten muss. Gemäß der vorliegenden Erfindung wird dadurch in vorteilhafter Weise eine Lastverteilung derart erzielt, dass stets alle verfügbaren Server-d.h. insbesondere Server mit demselben Priorisierungswert und Server mit unterschiedlichen Priorisierungswerten (einschließlich der Ausfallsicherungsserver) - zur Lastverteilung herangezogen werden, auch wenn für alle Server mit demselben Priorisierungswert (hier Primärserver 11, 12) wenigstens ein Server ausfällt und zugleich wenigstens ein Server verfügbar ist.

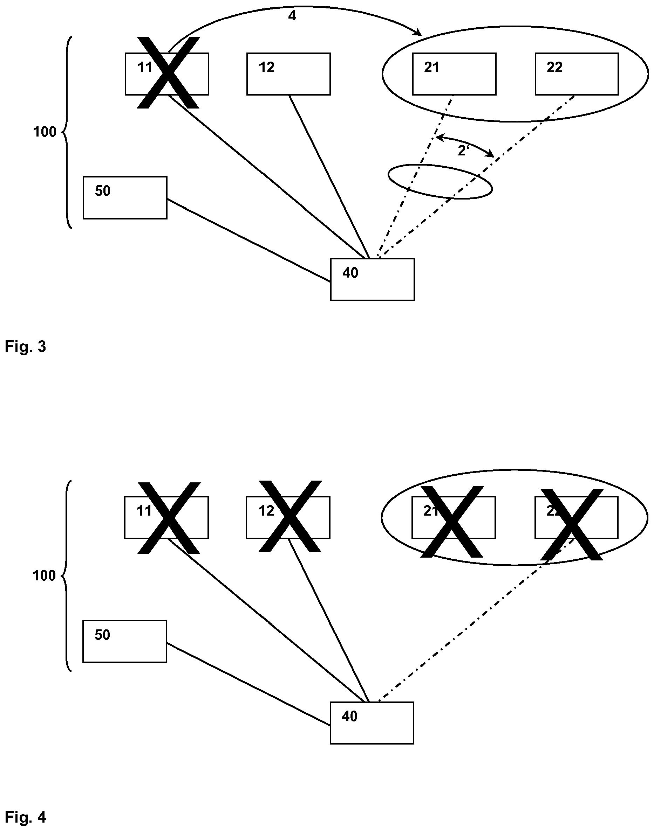

In Figur 3 ist ein System zur verbesserten Lastverteilung bezüglich der Bereitstellung eines Netzwerkdienstes in einem Computernetzwerk gemäß der vorliegenden Erfindung schematisch veranschaulicht. Die erfindungsgemäß verbesserte Lastverteilung wird für ein System realisiert, welches insbesondere bereits das Domain Name System (DNS) Protokoll zur Lastverteilung und Ausfallsicherung verwendet. Gemäß einer bevorzugten Ausführungsform der vorliegenden Erfindung wird das Domain Name System (DNS) Protokoll um ein zusätzliches Datenfeld pro Eintrag erweitert. Das zusätzliche Datenfeld wird insbesondere als Ausfallpriorisierungswert und die Gesamtheit der Ausfallpriorisierungswerte aller Einträge der Service Resource Record (SRV) Datensätze auch als Ausfallpriorisierungsdaten bezeichnet.

Gemäß einer bevorzugten Ausführungsform der vorliegenden Erfindung haben die Einträge der Service Resource Record (SRV) Datensätze jeweils im Wesentlichen die folgende Form:
"_service._proto.name. TTL class SRV priority weight failure_priority port target.".
Als Position des zusätzlichen Datenfeldes - welches hier als "failure_priority" bezeichnet ist - kann alternativ insbesondere auch eine andere Position innerhalb des Eintrags gewählt werden.

Gemäß einer bevorzugten Ausführungsform der vorliegenden Erfindung wird durch den Ausfallpriorisierungswert (bzw. das Datenfeld "failure_priority") - für den Fall, dass der Zielserver gemäß dem Datenfeld "target" (für die Bereitstellung des Netzwerkdienstes gemäß dem Datenfeld "_service" an das Client-Gerät 40) ausfällt - der Priorisierungswert (bzw. das Datenfeld "priority") eines alternativen Servers (zweiter Server oder Ersatzserver) definiert. Dies bedeutet - gemäß einer bevorzugten Ausführungsform der vorliegenden Erfindung - eine Konfiguration des Client-Geräts 40 derart, dass - für den Fall, dass der erste Server 11 für die Bereitstellung des Netzwerkdienstes an das Client-Gerät 40 ausfällt - als Ersatzserver für den ausgefallenen ersten Server 11 ein Server in Abhängigkeit der Ausfallpriorisierungsdaten der Service Resource Record Datensätze derart ermittelt wird, dass der in den Service Resource Record Datensätzen dem (ausgefallenen) ersten Server 11 zugeordnete Ausfallpriorisierungswert und der in den Service Resource Record Datensätzen dem Ersatzserver zugeordnete Priorisierungswert gleichranging sind. Diese Situation ist beispielhaft in Figur 3 durch den mit Bezugszahl 4 gekennzeichneten Doppelpfeil illustriert.

Gemäß einer beispielhaften Ausführungsform gemäß Figur 3 umfassen die Service Resource Record (SRV) Datensätze der vorliegenden Erfindung die folgenden vier Einträge:
_sip._tcp.example.com. 3600 IN SRV 0 80 1 5060 server11.example.com
_sip._tcp.example.com. 3600 IN SRV 0 20 1 5060 server12.example.com
_sip._tcp.example.com. 3600 IN SRV 1 50 1 5060 server21.example.com
_sip._tcp.example.com. 3600 IN SRV 1 50 1 5060 server22.example.com.
Hier wird - für den Fall, dass als erster Server einer der beiden Primärserver 11 oder 12 mit dem niedrigsten Priorisierungswert "0" ausfällt (in Figur 3 ist dies der Primärserver 11) - als zweiter Server ein Zielserver aus den Sekundärservern 21, 22 ermittelt wird. In dieser beispielhaften Ausführungsform wird insbesondere ausschließlich ein Sekundärserver 21, 22 selektiert, da der erste Eintrag den Ausfallpriorisierungswert "1" aufweist und die beiden Sekundärserver 21, 22 den Priorisierungswert "1" aufweisen, welcher zu dem Ausfallpriorisierungswert des ausgefallenen ersten Servers 11 gleichrangig ist. Für den Fall, dass der ermittelte zweite Server 21 für eine Dienstnutzung durch das Client-Gerät 40 verfügbar ist, wird der Netzwerkdienst dem Client-Gerät 40 durch den zweiten Server bereitgestellt. Diese Situation ist durch Bezugszahl 2' in Figur 3 illustriert.

Gemäß einer bevorzugten Ausführungsform der vorliegenden Erfindung werden - für den Fall, dass der erste Server 11 für die Bereitstellung des Netzwerkdienstes an das Client-Gerät 40 ausfällt - die Netzwerkdienstanfragen durch das Client-Gerät 40 gemäß den Lastverteilungsdaten auf die übrigen Server verteilt. Die Netzwerkdienstanfragen werden in Abhängigkeit der auf die Primärserver bezogenen Lastverteilungsdaten verteilt. In dem oben genannten Beispiel sind dies gemäß dem Gewicht "20" somit 20% der Anfragen, die auf den Primärserver 12 verteilt werden. Die restlichen Anfragen - d.h. die Anfragen die gemäß dem Lastverteilungswert des ersten Eintrags auf den ausgefallenen ersten Server 11 entfallen würden (in dem oben genannten Beispiel sind dies Gemäß dem Gewicht "80" somit 80% der Anfragen)-werden hier gemäß den Lastverteilungswerten auf die Sekundärserver 21, 22 verteilt, die auf die Sekundärserver bezogen sind (in dem oben genannten Beispiel sind dies gemäß den Gewichten "50" jeweils ein Anteil von 50% der (ursprünglich auf den ausgefallenen ersten Server verteilten) 80% der Anfragen, also insgesamt jeweils 40% der Anfragen). Insbesondere für den Fall, dass alle Primärserver 11, 12 ausfallen, erhalten hier die beiden Sekundärserver 21, 22 jeweils 50% der Anfragen des Client-Geräts 40. Hierdurch ist es erfindungsgemäß vorteilhaft möglich, dass alle Server weniger als 100% der Netzwerklast verarbeiten müssen, solange wenigstens zwei Server verfügbar sind.

In Figur 4 ist ein System zur verbesserten Lastverteilung bezüglich der Bereitstellung eines Netzwerkdienstes in einem Computernetzwerk gemäß der vorliegenden Erfindung schematisch veranschaulicht. Gemäß einer bevorzugten Ausführungsform der vorliegenden Erfindung wird - für den Fall, dass alle Zielserver mit einem zu dem ausgefallenen ersten Server 11 gleichrangigen Priorisierungswert (hier Primärserver 11, 12) für die Bereitstellung des Netzwerkdienstes an das Client-Gerät 40 ausfallen (bzw. unverfügbar sind) und darüber hinaus auch alle Zielserver (hier Sekundärserver 21, 22) für die Bereitstellung des Netzwerkdienstes an das Client-Gerät 40 ausfallen, denen in den Service Resource Record (SRV) Datensätzen ein Priorisierungswert zugeordnet ist, der mit dem Priorisierungswert des (ausgefallenen) ersten Servers 11 gleichrangig ist - als Ersatzserver ein Server ermittelt wird, den in dem Service Resource Record (SRV) Datensätzen ein Priorisierungswert zugeordnet ist, der gegenüber dem Ausfallpriorisierungswert des (ausgefallenen) ersten Servers 11 nachrangig (hier also größer) ist. In der in Figur 4 beispielhaft dargestellten Ausführungsform sind alle Primärserver 11, 12 ausgefallen und darüber hinaus auch alle Sekundärserver 21, 22, sodass ein weiterer (in Figur 4 jedoch nicht dargestellter) Server mit einem Priorisierungswert (in diesem Beispiel wäre dies der Wert "2" oder mehr) ermittelt wird, der gegenüber dem in den Service Resource Record Datensätzen dem ersten Server 11 zugeordneten Ausfallpriorisierungswert (in diesem Beispiel der Wert "1") nachrangig ist. In diesem Beispiel wäre ein solcher weiterer Server ein Tertiärserver, der als Ersatzserver verwendet wird.

Gemäß einer bevorzugten Ausführungsform der vorliegenden Erfindung umfasst das Computernetzwerk 100 mehrere Primärserver 11, 12 mit einem ersten Primärserver 11 und einem zweiten Primärserver 12. Weiterhin umfasst das Computernetzwerk wenigstens einen Sekundärserver 21, 22 (d.h. Ausfallsicherungsserver) mit einem ersten Sekundärserver 21 und einem zweiten Sekundärserver 22, sowie insbesondere weitere Ausfallsicherungsserver. Durch das Client-Gerät 40 werden von dem Domain Name System (DNS) Server 50 (spezifisch zur Verwendung durch das Client-Gerät 40 ausgewählte) Service Resource Record (SRV) Datensätze abgerufenen und in einem Speicherbereich (Domain Name System (DNS) Cache) des Client-Geräts 40 gespeichert.

Gemäß einer beispielhaften Ausführungsform der vorliegenden Erfindung enthalten die Service Resource Record (SRV) Datensätze - für denselben Netzwerkdienst - einen dem ersten Primärserver 11 zugeordneten ersten Eintrag, einen dem zweiten Primärserver 12 zugeordneten zweiten Eintrag, einen dem ersten Sekundärserver 21 zugeordneten dritten Eintrag und einen dem zweiten Sekundärserver 22 zugeordneten vierten Eintrag. Der erste Eintrag - welcher dem ersten Primärserver 11 zugeordnet ist - weist einen ersten Priorisierungswert, einen ersten Lastverteilungswert und einen ersten Ausfallpriorisierungswert auf. Der zweite Eintrag - welcher dem zweiten Primärserver 12 zugeordnet ist - weist einen zweiten Priorisierungswert, einen zweiten Lastverteilungswert und einen zweiten Ausfallpriorisierungswert auf. Der dritte Eintrag - welcher dem ersten Sekundärserver 21 zugeordnet ist - weist einen dritten Priorisierungswert, einen dritten Lastverteilungswert und einen dritten Ausfallpriorisierungswert auf. Der vierte Eintrag - welcher dem zweiten Sekundärserver 22 zugeordnet ist - weist einen vierten Priorisierungswert, einen vierten Lastverteilungswert und einen vierten Ausfallpriorisierungswert auf. Insbesondere umfassen die Service Resource Record (SRV) Datensätze noch einen fünften Eintrag - welcher dem Tertiärserver zugeordnet ist - und einen fünften Priorisierungswert, einen fünften Lastverteilungswert und einen fünften Ausfallpriorisierungswert.

Gemäß einer beispielhaften Ausführungsform der vorliegenden Erfindung weisen der erste und der zweite Priorisierungswert denselben Wert (beispielsweise den Wert "0") auf. Weiterhin weisen der dritte und der vierte Priorisierungswert denselben Wert (beispielsweise den Wert "1") auf, welcher gegenüber dem ersten und zweiten Priorisierungswert nachrangig (hier also höher) ist. Ferner ist der fünfte Priorisierungswert gegenüber dem ersten, zweiten, dritten und vierten Priorisierungswert nachrangig (d.h. beispielsweise beträgt der fünfte Priorisierungswert "2"). Der erste Lastverteilungswert beträgt in dieser beispielhaften Ausführungsform 80, der zweite Lastverteilungswert beträgt 20, der dritte Lastverteilungswert beträgt 50, der vierte Lastverteilungswert beträgt 50 und insbesondere beträgt der fünfte Lastverteilungswert den Wert 100. Weiterhin beträgt hier der erste bis vierte Ausfallpriorisierungswert jeweils einen Wert, der gleich dem dritten und vierten Priorisierungswert ist - in dieser beispielhaften Ausführungsform ist dies der Wert "1".

Gemäß einer beispielhaften Ausführungsform der vorliegenden Erfindung werden - für den Fall, dass der erste und zweite Primärserver 11, 12 verfügbar sind - ein erster Anteil der Anfragen bezüglich des Netzwerkdienstes gemäß dem ersten Lastverteilungswert (hier 80% der Anfragen) durch den ersten Primärserver 11 verarbeitet und ein zweiter Anteil der Anfragen bezüglich des Netzwerkdienstes gemäß dem zweiten Lastverteilungswert (hier 20% der Anfragen) durch den zweiten Primärserver 12 verarbeitet. Für den Fall, dass der erste Primärserver 11 für die Bereitstellung des Netzwerkdienstes an das Client-Gerät 40 ausfällt und der zweite Primärserver 12 weiterhin verfügbar ist, werden - gemäß der vorliegenden Erfindung - weiterhin der zweite Anteil der Anfragen bezüglich des Netzwerkdienstes gemäß dem zweiten Lastverteilungswert (hier 20% der Anfragen) durch den zweiten Primärserver 12 verarbeitet und - da der erste Ausfallpriorisierungswert (hier "1") und der zweite und dritte Priorisierungswert (hier ebenfalls "1") denselben Wert haben - werden der erste Anteil der Anfragen bezüglich des Netzwerkdienstes gemäß dem ersten Lastverteilungswert (hier 80% der Anfragen) zur Verarbeitung durch den ersten und zweiten Sekundärserver 21, 22 auf den ersten und zweiten Sekundärserver 21, 22 verteilt. Somit wird - für den Fall, dass der erste Server 11 für die Bereitstellung des Netzwerkdienstes an das Client-Gerät 40 ausfällt - der zweite Server 21 in Abhängigkeit des ersten Ausfallpriorisierungswertes (hier "1") des ersten Eintrags ermittelt. Die auf den ersten und zweiten Sekundärserver 21, 22 entfallenden Anfragen (hier in Höhe von insgesamt 80%) werden im Verhältnis der dritten und vierten Lastverteilungswerte (d.h. hier zu jeweils 50%) auf den ersten und zweiten Sekundärserver 21, 22 verteilt. Somit wird - für den Fall, dass der erste Server 11 für die Bereitstellung des Netzwerkdienstes an das Client-Gerät 40 ausfällt -der zweite Server 21 aus einem der beiden Sekundärserver 21, 22 in Abhängigkeit der (den Sekundärservern zugeordneten) Lastverteilungsdaten der Service Resource Record (SRV) Datensätze selektiert.

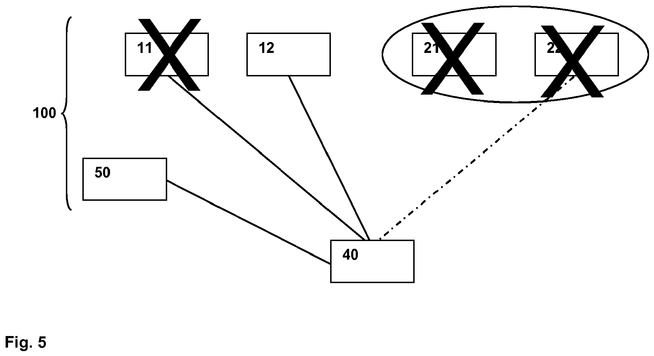

In Figur 5 ist eine bevorzugte Ausführungsform der vorliegenden Erfindung illustriert, wobei - für den Fall, dass der erste Primärserver 11 für die Bereitstellung des Netzwerkdienstes an das Client-Gerät 40 ausfällt, darüber hinaus der erste und zweite Sekundärserver 21, 22 für die Bereitstellung des Netzwerkdienstes an das Client-Gerät 40 ausfallen und auch sonst alle weiteren Sekundärserver für die Bereitstellung des Netzwerkdienstes an das Client-Gerät 40 ausfallen (d.h. solche weiteren Sekundärserver, denen in den Service Resource Record (SRV) Datensätzen ein Priorisierungswert zugeordnet ist, der zu dem ersten Ausfallpriorisierungswert des ersten Servers 11 gleichrangig ist) - als Ersatzserver der zweite Primärserver 12 ermittelt, dessen Priorisierungswert mit dem ersten Priorisierungswert des ersten Servers 11 gleichrangig ist. Dabei wird erst dann (d.h. nachrangig), wenn alle (vorrangigen) Sekundärserver 21, 22 für die Bereitstellung des Netzwerkdienstes an das Client-Gerät 40 ausgefallen sind, ein Primärserver 12 selektiert.

Gemäß einer bevorzugten Ausführungsform der vorliegenden Erfindung (welche in Figur 4 schematisch illustriert ist) wird für den Fall, dass
-- der erste Primärserver 11 für die Bereitstellung des Netzwerkdienstes an das Client-Gerät 40 ausfällt, und
-- alle übrigen Server 21, 22 mit einem zu dem ersten Ausfallpriorisierungswert des ersten Servers 11 gleichrangigen (dritten bzw. vierten) Priorisierungswert für die Bereitstellung des Netzwerkdienstes an das Client-Gerät 40 ausfallen (hier der erste und zweite Sekundärserver 21, 22), und darüber hinaus
-- alle übrigen Server 12 mit einem zu dem ersten Priorisierungswert des ersten Servers 11 gleichrangigen Priorisierungswert für die Bereitstellung des Netzwerkdienstes an das Client-Gerät 40 ausfallen (hier der zweite Primärserver 12),
durch das Client-Gerät als Ersatzserver aus den mehreren Server 11, 12, 21, 22 ein Server selektiert, dessen Priorisierungswert gegenüber dem ersten Ausfallpriorisierungswert des ersten Servers 11 nachrangig ist. Das bedeutet hier, dass der Tertiärserver selektiert wird, bei welchem der fünfte Priorisierungswert (hier der Wert "2") gegenüber dem ersten Ausfallpriorisierungswert (mit dem Wert "1") nachrangig ist (d.h. hier ist der fünfte Priorisierungswert "2" größer als der erste Ausfallpriorisierungswert "1").

## Patentansprüche

1. Verfahren zur Lastverteilung bei der Bereitstellung eines Netzwerkdienstes in einem Computernetzwerk (100), wobei das Computernetzwerk (100) mehrere Server (11, 12, 21, 22) zur Bereitstellung des Netzwerkdienstes an ein Client-Gerät (40) umfasst, wobei die mehreren Server (11, 12, 21, 22) mehrere Primärserver (11, 12) umfassen, wobei die mehreren Server (11, 12, 21, 22) zusätzlich zu den mehreren Primärservern (11, 12) wenigstens einen Sekundärserver (21, 22) zur Ausfallsicherung umfassen und wobei die mehreren Primärserver (11, 12) eine Gruppe von Servern mit demselben Priorisierungswert darstellen, wobei das Computernetzwerk (100) einen Domain Name System, DNS, Server (50) zur Bereitstellung von Service Resource Record, SRV, Datensätzen aufweist, wobei die Service Resource Record, SRV, Datensätze Lastverteilungsdaten und einschließlich des genannten Priorisierungswerts für die mehreren Primärserver und eines Ausfallssicherungspriorisierungswerts für den mindestens einen Sekundärserver aufweisen, wobei das Client-Gerät (40) mit dem Computernetzwerk (100) zur Verwendung des Netzwerkdienstes verbunden ist, wobei das Verfahren die folgenden Schritte umfasst:
-- Ermitteln, durch das Client-Gerät (40), eines ersten Servers (11), wobei der erste Server (11) in Abhängigkeit der Lastverteilungsdaten der Service Resource Record ,SRV, Datensätze aus den mehreren Primärservern (11, 12) selektiert wird,
-- Bereitstellen - für den Fall, dass der erste Server (11) für die Bereitstellung des Netzwerkdienstes an das Client-Gerät (40) verfügbar ist - des Netzwerkdienstes an das Client-Gerät (40) durch den ersten Server (11), wobei das Verfahren **dadurch gekennzeichnet ist, dass** das Verfahren die folgenden Schritte weiter umfasst:
- für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist - Ermitteln, durch das Client-Gerät (40), eines zweiten Servers (21) aus dem wenigstens einen Sekundärserver (21, 22), wobei der zweite Server (21) in Abhängigkeit der Lastverteilungsdaten der Service Resource Record, SRV, Datensätze aus dem wenigstens einen Sekundärserver (21, 22) ermittelt wird, wobei - falls der zweite Server (21) für eine Dienstnutzung durch das Client-Gerät (40) verfügbar ist - der Netzwerkdienst dem Client-Gerät (40) durch den zweiten Server (21) bereitgestellt wird.

2. Verfahren nach Anspruch 1, wobei der wenigstens eine Sekundärserver (21, 22) aus den mehreren Servern (11, 12, 21, 22) in Abhängigkeit eines Ausfallpriorisierungswertes der Service Resource Record, SRV, Datensätze bestimmt wird.

3. Verfahren nach einem der vorhergehenden Ansprüche, wobei - für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist - ausschließlich ein Server des wenigstens einen Sekundärservers (21, 22) zur Ausfallsicherung für den ersten Server (11) selektiert wird.

4. Verfahren nach einem der vorhergehenden Ansprüche, wobei der wenigstens eine Sekundärserver (21, 22) einen ersten Sekundärserver (21) und einen zweiten Sekundärserver (22) umfasst, wobei - für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist - der erste Sekundärserver (21) als der zweite Server (21) aus dem wenigstens einen Sekundärserver (21, 22) in Abhängigkeit der auf die Sekundärserver (21, 22) bezogenen Lastverteilungsdaten der Service Resource Record, SRV, Datensätze ermittelt wird.

5. Verfahren nach einem der vorhergehenden Ansprüche, wobei der erste Server (11) aus den mehreren Primärservern (11, 12) in Abhängigkeit der auf die mehreren Primärserver (11, 12) bezogenen Lastverteilungsdaten der Service Resource Record, SRV, Datensätze ermittelt wird, wobei - für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist und der zweite Server (21) für eine Dienstnutzung durch das Client-Gerät (40) verfügbar ist - der Netzwerkdienst dem Client-Gerät (40) durch den zweiten Server (21) derart bereitgestellt wird, dass ein Anteil von Netzwerkdienstanfragen des Client-Geräts (40) durch den zweiten Server (21) verarbeitet wird, wobei der Anteil in Abhängigkeit eines auf den ersten Server (11) bezogenen Lastverteilungswert bestimmt wird, wobei der Anteil insbesondere in Abhängigkeit einer Multiplikation des auf den ersten Server (11) bezogenen Lastverteilungswertes mit einem auf den zweiten Server (21) bezogenen Lastverteilungswert bestimmt wird.

6. Verfahren nach einem der vorhergehenden Ansprüche, wobei die Service Resource Record, SRV, Datensätze Priorisierungsdaten, Lastverteilungsdaten und Ausfallpriorisierungsdaten umfassen, wobei jeweils ein Eintrag der Service Resource Record, SRV, Datensätze einem Server der mehreren Server (11, 12, 21, 22) zugeordnet sind, wobei jeder Eintrag jeweils einen Priorisierungswert der Priorisierungsdaten, einen Lastverteilungswert der Lastverteilungsdaten und einen Ausfallpriorisierungswert der Ausfallpriorisierungsdaten umfassen, wobei der erste Server (11) in Abhängigkeit eines ersten Priorisierungswertes und eines ersten Lastverteilungswertes eines dem ersten Server (11) zugeordneten ersten Eintrags ermittelt wird und - für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist - der zweite Server (21) in Abhängigkeit eines ersten Ausfallpriorisierungswertes des ersten Eintrags ermittelt wird.

7. Verfahren nach einem der vorhergehenden Ansprüche, wobei - für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist - als zweiter Server (21) ein Server ermittelt wird, dem in einem zweiten Eintrag der Service Resource Record, SRV, Datensätze ein zweiter Priorisierungswert zugeordnet ist, der einem dem ersten Server (11) zugeordneten ersten Ausfallpriorisierungswert der Service Resource Record, SRV, Datensätze gleichrangig ist.

8. Verfahren nach einem der vorhergehenden Ansprüche, wobei - für den Fall, dass der erste Server (11) für die Bereitstellung des Netzwerkdienstes an das Client-Gerät (40) ausfällt und alle Sekundärserver (21, 22) - denen in den Service Resource Record, SRV, Datensätzen insbesondere ein Priorisierungswert zugeordnet ist, der zu dem ersten Ausfallpriorisierungswert des ersten Servers (11) gleichrangig ist - für die Bereitstellung des Netzwerkdienstes an das Client-Gerät (40) ausfallen - zur Ausfallsicherung für den ausgefallenen ersten Server (11) ein weiterer erster Server (12) aus den mehreren Primärservern (11, 12) ermittelt wird, dessen Priorisierungswert insbesondere mit dem ersten Priorisierungswert des ersten Servers (11) gleichrangig ist.

9. Verfahren nach einem der vorhergehenden Ansprüche, wobei - für den Fall, dass der erste Server (11) für die Bereitstellung des Netzwerkdienstes an das Client-Gerät (40) ausfällt und alle Sekundärserver (21, 22) - insbesondere mit einem zu dem ersten Ausfallpriorisierungswert des ersten Servers (11) gleichrangigen Priorisierungswert - für die Bereitstellung des Netzwerkdienstes an das Client-Gerät (40) ausfallen - zur Ausfallsicherung für den ausgefallenen ersten Server (11) ein Tertiärserver der mehreren Server (11, 12, 21, 22) ermittelt wird, dessen Priorisierungswert insbesondere gegenüber dem ersten Ausfallpriorisierungswert des ersten Servers (11) nachrangig ist.

10. System zur Lastverteilung bei der Bereitstellung eines Netzwerkdienstes in einem Computernetzwerk (100), wobei das System das Computernetzwerk (100) und ein Client-Gerät (40) umfasst, wobei das Computernetzwerk (100) mehrere Server (11, 12, 21, 22) zur Bereitstellung des Netzwerkdienstes an das Client-Gerät (40) umfasst, wobei die mehreren Server (11, 12, 21, 22) mehrere Primärserver (11, 12) umfassen, wobei die mehreren Server (11, 12, 21, 22) zusätzlich zu den mehreren Primärservern (11, 12) wenigstens einen Sekundärserver (21, 22) zur Ausfallsicherung umfassen und wobei die mehreren Primärserver (11, 12) eine Gruppe von Servern mit demselben Priorisierungswert darstellen, wobei das Computernetzwerk (100) einen Domain Name System, DNS, Server (50) zur Bereitstellung von Service Resource Record, SRV, Datensätzen aufweist, wobei die Service Resource Record, SRV, Datensätze Lastverteilungsdaten und einschließlich des genannten Priorisierungswerts für die mehreren Primärserver und eines Ausfallssicherungspriorisierungswerts für den mindestens einen Sekundärserver aufweisen, wobei das Client-Gerät (40) mit dem Computernetzwerk (100) zur Verwendung des Netzwerkdienstes verbunden ist, wobei das Client-Gerät (40) zum Ermitteln eines ersten Servers (11) konfiguriert ist, wobei das Client-Gerät (40) konfiguriert ist, den ersten Server (11) in Abhängigkeit der Lastverteilungsdaten der Service Resource Record, SRV, Datensätze aus den mehreren Primärservern (11, 12) zu selektieren, wobei das System derart konfiguriert ist, dass - für den Fall, dass der erste Server (11) für die Bereitstellung des Netzwerkdienstes an das Client-Gerät (40) verfügbar ist - der Netzwerkdienst an das Client-Gerät (40) durch den ersten Server (11) bereitgestellt wird,
wobei das System **dadurch gekennzeichnet ist, dass** das System derart konfiguriert ist, dass:
- für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist - durch das Client-Gerät (40) ein zweiter Server (21) aus dem wenigstens einen Sekundärserver (21, 22) ermittelt wird, wobei das Client-Gerät (40) derart konfiguriert ist, dass der zweite Server (21) in Abhängigkeit der Lastverteilungsdaten der Service Resource Record, SRV, Datensätze aus dem wenigstens einen Sekundärserver (21, 22) ermittelt wird, wobei das System derart konfiguriert ist, dass - für den Fall, dass der zweite Server (21) für eine Dienstnutzung durch das Client-Gerät (40) verfügbar ist - der Netzwerkdienst dem Client-Gerät (40) durch den zweiten Server (21) bereitgestellt wird.

11. System nach Anspruch 10, wobei das System derart konfiguriert ist, dass - für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist -ausschließlich ein Server des wenigstens einen Sekundärservers (21, 22) zur Ausfallsicherung für den ersten Server (11) selektiert wird.

12. System nach einem der Ansprüche 10 oder 11, wobei der wenigstens eine Sekundärserver (21, 22) einen ersten Sekundärserver (21) und einen zweiten Sekundärserver (22) umfasst, wobei das Client-Gerät (40) derart konfiguriert ist, dass - für den Fall, dass der erste Server (11) für die Bereitstellung des Netzwerkdienstes an das wenigstens eine Client-Gerät (40) ausfällt und ein weiterer Server (12) der mehreren Primärserver (11, 12) für die Bereitstellung des Netzwerkdienstes an das Client-Gerät (40) verfügbar ist - der erste Sekundärserver (21) als der zweite Server (21) aus dem wenigstens einen Sekundärserver (21, 22) in Abhängigkeit der auf die Sekundärserver (21, 22) bezogenen Lastverteilungsdaten der Service Resource Record, SRV, Datensätze ermittelt wird.

13. System nach einem der Ansprüche 10 bis 12, wobei das Client-Gerät (40) derart konfiguriert ist, dass der erste Server (11) aus den mehreren Primärservern (11, 12) in Abhängigkeit der auf die mehreren Primärserver (11, 12) bezogenen Lastverteilungsdaten der Service Resource Record, SRV, Datensätze ermittelt wird, wobei das Client-Gerät (40) derart konfiguriert ist, dass - für den Fall, dass der erste Server (11) für die Bereitstellung des Netzwerkdienstes an das Client-Gerät (40) ausfällt und ein weiterer Server (12) der mehreren Primärserver (11, 12) für die Bereitstellung des Netzwerkdienstes an das Client-Gerät (40) verfügbar ist und der zweite Server (21) für eine Dienstnutzung durch das Client-Gerät (40) verfügbar ist - der Netzwerkdienst dem Client-Gerät (40) durch den zweiten Server (21) derart bereitgestellt wird, dass ein Anteil von Netzwerkdienstanfragen des Client-Geräts (40) durch den zweiten Server (21) verarbeitet wird, wobei der Anteil in Abhängigkeit eines auf den ersten Server (11) bezogenen Lastverteilungswert bestimmt wird, wobei der Anteil insbesondere in Abhängigkeit einer Multiplikation des auf den ersten Server (11) bezogenen Lastverteilungswertes mit einem auf den zweiten Server (21) bezogenen Lastverteilungswert bestimmt wird.

14. Computerprogramm mit einem computerlesbaren Programmcode, mit dessen Hilfe ein Verfahren nach einem der Ansprüche 1 bis 9 durchführbar ist, wenn der computerlesbare Programmcode auf einer programmierbaren Einrichtung ausgeführt wird.

15. Computerprogrammprodukt mit einem auf einem Speichermedium gespeicherten Computerprogramm nach Anspruch 14, mit dessen Hilfe ein Verfahren nach einem der Ansprüche 1 bis 9 durchführbar ist, wenn der computerlesbare Programmcode auf einer programmierbaren Einrichtung ausgeführt wird.

## Claims

1. Method for load distribution in the provision of a network service in a computer network (100), wherein the computer network (100) comprises a plurality of servers (11, 12, 21, 22) for providing the network service to a client device (40), wherein the plurality of servers (11, 12, 21, 22) comprise a plurality of primary servers (11, 12) wherein the plurality of servers (11, 12, 21, 22) comprise, in addition to the plurality of primary servers (11, 12), at least one secondary server (21, 22) for failover purposes and wherein the plurality of primary servers (11, 12) constitute a group of servers having the same prioritisation value, wherein the computer network (100) has a domain name system, DNS, server (50) for providing service resource record, SRV, datasets, wherein the service resource record, SRV, datasets have load distribution data and including said prioritisation value for the plurality of primary servers and a failover prioritisation value for the at least one secondary server, wherein the client device (40) is connected to the computer network (100) for using the network service,
wherein the method comprises the steps of:
- determining, by means of the client device (40), a first server (11), wherein the first server (11) is selected in dependence upon the load distribution data of the service resource record, SRV, datasets from the plurality of primary servers (11, 12),
- providing - in the event that the first server (11) for providing the network service to the client device (40) is available - the network service to the client device (40) by means of the first server (11),
wherein the method is **characterised in that** the method further comprises the steps of:
- in the event that the first server (11) for providing the network service to the client device (40) fails and a further server (12) of the plurality of primary servers (11, 12) for providing the network service to the client device (40) is available - determining, by means of the client device (40), a second server (21) from the at least one secondary server (21, 22), wherein the second server (21) is determined in dependence upon the load distribution data of the service resource record, SRV, datasets from the at least one secondary server (21, 22), wherein - in the event that the second server (21) for service utilisation by means of the client device (40) is available - the network service is provided to the client device (40) by means of the second server (21).

2. Method as claimed in claim 1, wherein the at least one secondary server (21, 22) from the plurality of servers (11, 12, 21, 22) is determined in dependence upon a failure prioritisation value of the service resource record, SRV, datasets.

3. Method as claimed in any one of the preceding claims, wherein - in the event that the first server (11) for providing the network service to the client device (40) fails and a further server (12) of the plurality of primary servers (11, 12) for providing the network service to the client device (40) is available - exclusively one server of the at least one secondary server (21, 22) is selected for the purpose of failover for the first server (11).

4. Method as claimed in any one of the preceding claims, wherein the at least one secondary server (21, 22) comprises a first secondary server (21) and a second secondary server (22), wherein - in the event that the first server (11) for providing the network service to the client device (40) fails and a further server (12) of the plurality of primary servers (11, 12) for providing the network service to the client device (40) is available - the first secondary server (21) is determined as the second server (21) from the at least one secondary server (21, 22) in dependence upon the load distribution data of the service resource record, SRV, datasets related to the secondary servers (21, 22).

5. Method as claimed in any one of the preceding claims, wherein the first server (11) from the plurality of primary servers (11, 12) is determined in dependence upon the load distribution data of the service resource record, SRV, datasets related to the plurality of primary servers (11, 12), wherein - in the event that the first server (11) for providing the network service to the client device (40) fails and a further server (12) of the plurality of primary servers (11, 12) for providing the network service to the client device (40) is available and the second server (21) for service utilisation by means of the client device (40) is available - the network service is provided to the client device (40) by means of the second server (21) such that a proportion of network service requests of the client device (40) is processed by means of the second server (21), wherein the proportion is determined in dependence upon a load distribution value related to the first server (11), wherein the proportion is determined in particular in dependence upon a multiplication of the load distribution value related to the first server (11) by a load distribution value related to the second server (21).

6. Method as claimed in any one of the preceding claims, wherein the service resource record, SRV, datasets comprise prioritisation data, load distribution data and failure prioritisation data, wherein in each case an entry of the service resource record, SRV, datasets is allocated to a server of the plurality of servers (11, 12, 21, 22), wherein each entry comprises in each case a prioritisation value of the prioritisation data, a load distribution value of the load distribution data and a failure prioritisation value of the failure prioritisation data, wherein the first server (11) is determined in dependence upon a first prioritisation value and a first load distribution value of a first entry allocated to the first server (11) and - in the event that the first server (11) for providing the network service to the client device (40) fails and a further server (12) of the plurality of primary servers (11, 12) for providing the network service to the client device (40) is available - the second server (21) is determined in dependence upon a first failure prioritisation value of the first entry.

7. Method as claimed in any one of the preceding claims, wherein - in the event that the first server (11) for providing the network service to the client device (40) fails and a further server (12) of the plurality of primary servers (11, 12) for providing the network service to the client device (40) is available - as the second server (21) a server is determined, to which in a second entry of the service resource record, SRV, datasets a second prioritisation value is allocated which is equally ranking with a first failure prioritisation value of the service resource record, SRV, datasets allocated to the first server (11) .

8. Method as claimed in any one of the preceding claims, wherein - in the event that the first server (11) for providing the network service to the client device (40) fails and all secondary servers (21, 22) - to which in the service resource record, SRV, datasets in particular a prioritisation value is allocated which is equally ranking with the first failure prioritisation value of the first server (11) - for providing the network service to the client device (40) fail - for the purpose of failover for the failed first server (11) a further first server (12) from the plurality of primary servers (11, 12) is determined, of which the prioritisation value is equally ranking in particular with the first prioritisation value of the first server (11).

9. Method as claimed in any one of the preceding claims, wherein - in the event that the first server (11) for providing the network service to the client device (40) fails and all secondary services (21, 22) - in particular having a prioritisation value which is equally ranking with the first failure prioritisation value of the first server (11) - for providing the network service to the client device (40) fail - for the purpose of failover for the failed first server (11) a tertiary server of the plurality of servers (11, 12, 21, 22) is determined, of which the prioritisation value is lower-ranking in particular than the first failure prioritisation value of the first server (11).

10. System for load distribution in the provision of a network service in a computer network (100), wherein the system comprises the computer network (100) and a client device (40), wherein the computer network (100) comprises a plurality of servers (11, 12, 21, 22) for providing the network service to a client device (40), wherein the plurality of servers (11, 12, 21, 22) comprise a plurality of primary servers (11, 12) wherein the plurality of servers (11, 12, 21, 22) comprise, in addition to the plurality of primary servers (11, 12), at least one secondary server (21, 22) for failover purposes and wherein the plurality of primary servers (11, 12) constitute a group of servers having the same prioritisation value, wherein the computer network (100) has a domain name system, DNS, server (50) for providing service resource record, SRV, datasets, wherein the service resource record, SRV, datasets have load distribution data and including said prioritisation value for the plurality of primary servers and a failover prioritisation value for the at least one secondary server, wherein the client device (40) is connected to the computer network (100) for using the network service, wherein the client device (40) is configured to determine a first server (11), wherein the client device (40) is configured to select the first server (11) in dependence upon the load distribution data of the service resource record, SRV, datasets from the plurality of primary servers (11, 12), wherein the system is configured in such a way that - in the event that the first server (11) for providing the network service to the client device (40) is available - the network service is provided to the client device (40) by means of the first server (11), wherein the system is **characterised in that** the system is configured in such a way that - in the event that the first server (11) for providing the network service to the client device (40) fails and a further server (12) of the plurality of primary servers (11, 12) for providing the network service to the client device (40) is available - a second server (21) from the at least one secondary server (21, 22) is determined by means of the client device (40), wherein the client device (40) is configured in such a way that the second server (21) is determined in dependence upon the load distribution data of the service resource record, SRV, datasets from the at least one secondary server (21, 22), wherein the system is configured in such a way that - in the event that the second server (21) for service utilisation by means of the client device (40) is available - the network service is provided to the client device (40) by means of the second server (21) .

11. System as claimed in claim 10, wherein the system is configured in such a way that - in the event that the first server (11) for providing the network service to the client device (40) fails and a further server (12) of the plurality of primary servers (11, 12) for providing the network service to the client device (40) is available - exclusively one server of the at least one secondary server (21, 22) is selected for the purpose of failover for the first server (11) .

12. System as claimed in any one of claims 10 or 11, wherein the at least one secondary server (21, 22) comprises a first secondary server (21) and a second secondary server (22), wherein the client device (40) is configured in such a way that - in the event that the first server (11) for providing the network service to the at least one client device (40) fails and a further server (12) of the plurality of primary servers (11, 12) for providing the network service to the client device (40) is available - the first secondary server (21) is determined as the second server (21) from the at least one secondary server (21, 22) in dependence upon the load distribution data of the service resource record, SRV, datasets related to the secondary servers (21, 22).

13. System as claimed in any one of claims 10 to 12, wherein the client device (40) is configured in such a way that the first server (11) from the plurality of primary servers (11, 12) is determined in dependence upon the load distribution data of the service resource record, SRV, datasets related to the plurality of primary servers (11, 12), wherein the client device (40) is configured in such a way that - in the event that the first server (11) for providing the network service to the client device (40) fails and a further server (12) of the plurality of primary servers (11, 12) for providing the network service to the client device (40) is available and the second server (21) for service utilisation by means of the client device (40) is available - the network service is provided to the client device (40) by means of the second server (21) such that a proportion of network service requests of the client device (40) is processed by means of the second server (21), wherein the proportion is determined in dependence upon a load distribution value related to the first server (11), wherein the proportion is determined in particular in dependence upon a multiplication of the load distribution value related to the first server (11) by a load distribution value related to the second server (21).

14. Computer program comprising a computer-readable program code, with the aid of which a method as claimed in any one of claims 1 to 9 can be carried out when the computer-readable program code is executed on a programmable device.

15. Computer program product comprising a computer program as claimed in claim 14 which is stored on a storage medium and with the aid of which a method as claimed in any one of claims 1 to 9 can be carried out when the computer-readable program code is executed on a programmable device.

## Revendications

1. Procédé de répartition de la charge lors de la fourniture d'un service réseau dans un réseau informatique (100), dans lequel le réseau informatique (100) comprend plusieurs serveurs (11, 12, 21, 22) pour la fourniture d'un service réseau à un appareil client (40), dans lequel les plusieurs serveurs (11, 12, 21, 22) comprennent plusieurs serveurs primaires (11, 12), dans lequel les plusieurs serveurs (11, 12, 21, 22) comprennent, outre les plusieurs serveurs primaires (11, 12), au moins un serveur secondaire (21, 22) pour le basculement et dans lequel les plusieurs serveurs primaires (11, 12) représentent un groupe de serveurs avec la même valeur de priorité, dans lequel le réseau informatique (100) comporte un serveur Domain Name System, DNS, (50) pour la fourniture de blocs de données d'enregistrement de ressource de service, SRV, dans lequel les blocs de données d'enregistrement de ressource de service, SRV, comportent des données de répartition de charge, incluant la valeur de priorité susmentionnée pour les plusieurs serveurs primaires et une valeur de priorité de basculement pour l'au moins un serveur secondaire, dans lequel l'appareil client (40) est relié au réseau informatique (100) pour utiliser le service réseau,
dans lequel le procédé comprend les étapes suivantes :
- détermination par l'appareil client (40) d'un premier serveur (11), dans lequel le premier serveur (11) est sélectionné parmi les plusieurs serveurs primaires (11, 12) en fonction des données de répartition de charge des blocs de données d'enregistrement de ressource de service, SRV,
- fourniture du service réseau à l'appareil client (40) par le premier serveur (11) - en cas de disponibilité du premier serveur (11) fournissant le service réseau à l'appareil client (40),
dans lequel le procédé est **caractérisé en ce que** le procédé comprend en outre les étapes suivantes :
- en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) - détermination par l'appareil client (40) d'un deuxième serveur (21) parmi l'au moins un serveur secondaire (21, 22), dans lequel le deuxième serveur (21) est déterminé parmi l'au moins un serveur secondaire (21, 22) en fonction des données de répartition de charge des blocs de données d'enregistrement de ressource de service, SRV, dans lequel le service réseau est fourni à l'appareil client (40) par le deuxième serveur (21) dans le cas où le deuxième serveur (21) est disponible pour une utilisation du service par l'appareil client (40).

2. Procédé selon la revendication 1, dans lequel l'au moins un serveur secondaire (21, 22) est déterminé parmi les plusieurs serveurs (11, 12, 21, 22) en fonction d'une valeur de priorité de basculement des blocs de données d'enregistrement de ressource de service, SRV.

3. Procédé selon l'une des revendications précédentes, dans lequel - en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) - un serveur de l'au moins un serveur secondaire (21, 22) est sélectionné exclusivement comme basculement pour le premier serveur (11).

4. Procédé selon l'une des revendications précédentes, dans lequel l'au moins un serveur secondaire (21, 22) comprend un premier serveur secondaire (21) et un deuxième serveur secondaire (22), dans lequel - en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) - le premier serveur secondaire (21) est déterminé comme le deuxième serveur (21) parmi l'au moins un serveur secondaire (21, 22) en fonction des données de répartition de charge des blocs de données d'enregistrement de ressource de service, SRV, se rapportant au serveur secondaire (21, 22).

5. Procédé selon l'une des revendications précédentes, dans lequel le premier serveur (11) est déterminé parmi les plusieurs serveurs primaires (11, 12) en fonction des données de répartition de charge des blocs de données d'enregistrement de ressource de service, SRV, se rapportant aux plusieurs serveurs primaires (11, 12), dans lequel - en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) et de disponibilité du deuxième serveur (21) pour une utilisation du service par l'appareil client (40) - le service réseau est fourni à l'appareil client (40) de telle sorte qu'une fraction des demandes de service réseau de l'appareil client (40) est traitée par le deuxième serveur (21), dans lequel la fraction est déterminée en fonction d'une valeur de répartition de charge se rapportant au premier serveur (11), dans lequel la fraction est en particulier déterminée en fonction d'une multiplication de la valeur de répartition de charge se rapportant au premier serveur (11) par une valeur de répartition de charge se rapportant au deuxième serveur (21).

6. Procédé selon l'une des revendications précédentes, dans lequel les blocs de données d'enregistrement de ressource de service, SRV, comprennent des données de priorité, des données de répartition de charge et des données de priorité de basculement, dans lequel une entrée des blocs de données d'enregistrement de ressource de service, SRV, est respectivement associée à un serveur des plusieurs serveurs (11, 12, 21, 22), dans lequel chaque entrée comprend respectivement une valeur de priorité des données de priorité, une valeur de répartition de charge des données de répartition de charge et une valeur de priorité de basculement des données de priorité de basculement, dans lequel le premier serveur (11) est déterminé en fonction d'une première valeur de priorité et d'une première valeur de répartition de charge d'une première entrée associée au premier serveur (11) et - en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) - le deuxième serveur (21) est déterminé en fonction d'une première valeur de priorité de basculement de la première entrée.

7. Procédé selon l'une des revendications précédentes, dans lequel - en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) - est déterminé comme deuxième serveur (21) un serveur auquel une deuxième valeur de priorité dans une deuxième entrée des blocs de données d'enregistrement de ressource de service, SRV, est associée, cette valeur étant de même rang qu'une première valeur de priorité de basculement des blocs de données d'enregistrement de ressource de service, SRV, associée au premier serveur (11).

8. Procédé selon l'une des revendications précédentes, dans lequel - en cas de défaillance du premier serveur (11) fournissant le service réseau à l'appareil client (40) et de tous les serveurs secondaires (21, 22) - auxquels est en particulier associée dans les blocs de données d'enregistrement de ressource de service, SRV, une valeur de priorité de rang égal à la première valeur de priorité de basculement du premier serveur (11) fournissant le service réseau à l'appareil client (40) - un premier serveur ultérieur (12) est déterminé comme basculement pour le premier serveur défaillant (11) parmi les plusieurs serveurs primaires (11, 12), dont la valeur de priorité est en particulier de rang égal à la première valeur de priorité du premier serveur (11).

9. Procédé selon l'une des revendications précédentes, dans lequel - en cas de défaillance du premier serveur (11) fournissant le service réseau à l'appareil client (40) et de tous les serveurs secondaires (21, 22) - en particulier avec une valeur de priorité de rang égal à la première valeur de priorité de basculement du premier serveur (11), fournissant le service réseau à l'appareil client (40) - un serveur tertiaire est déterminé comme basculement pour le premier serveur défaillant (11) parmi les plusieurs serveurs primaires (11, 12), dont la valeur de priorité est en particulier de rang inférieur à la première valeur de priorité de basculement du premier serveur (11).

10. Système de répartition de la charge lors de la fourniture d'un service réseau dans un réseau informatique (100), dans lequel le système comprend le réseau informatique (100) et un appareil client (40), dans lequel le réseau informatique (100) comprend plusieurs serveurs (11, 12, 21, 22) pour la fourniture du service réseau à l'appareil client (40), dans lequel les plusieurs serveurs (11, 12, 21, 22) comprennent plusieurs serveurs primaires (11, 12), dans lequel les plusieurs serveurs (11, 12, 21, 22) comprennent, outre les plusieurs serveurs primaires (11, 12), au moins un serveur secondaire (21, 22) pour le basculement et dans lequel les plusieurs serveurs primaires (11, 12) représentent un groupe de serveurs avec la même valeur de priorité, dans lequel le réseau informatique (100) comporte un serveur Domain Name System, DNS, (50) pour la fourniture de blocs de données d'enregistrement de ressource de service, SRV, dans lequel les blocs de données d'enregistrement de ressource de service, SRV, comportent des données de répartition de charge, incluant la valeur de priorité susmentionnée pour les plusieurs serveurs primaires et une valeur de priorité de basculement pour l'au moins un serveur secondaire, dans lequel l'appareil client (40) est relié au réseau informatique (100) pour utiliser le service réseau, dans lequel l'appareil client (40) est configuré pour déterminer un premier serveur (11), dans lequel l'appareil client (40) est configuré pour sélectionner le premier serveur (11) parmi les plusieurs serveurs primaires (11, 12) en fonction des données de répartition de charge des blocs de données d'enregistrement de ressource de service, SRV, dans lequel le système est configuré de telle sorte que, en cas de disponibilité du premier serveur (11) fournissant le service réseau à l'appareil client (40), le service réseau est fourni à l'appareil client (40) par le premier serveur (11), dans lequel le système est **caractérisé en ce que** le système est configuré de telle sorte que :
- en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) - un deuxième serveur (21) est déterminé par l'appareil client (40) parmi l'au moins un serveur secondaire (21, 22), dans lequel l'appareil client (40) est configuré de telle sorte que le deuxième serveur (21) est déterminé parmi l'au moins un serveur secondaire (21, 22) en fonction des données de répartition de charge des blocs de données d'enregistrement de ressource de service, SRV, dans lequel le système est configuré de telle sorte que - en cas de disponibilité du deuxième serveur (21) pour une utilisation du service par l'appareil client (40) - le service réseau est fourni à l'appareil client (40) par le deuxième serveur (21).

11. Système selon la revendication 10, dans lequel système est configuré de telle sorte que - en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) - un serveur de l'au moins un serveur secondaire (21, 22) est sélectionné exclusivement comme basculement pour le premier serveur (11).

12. Système selon l'une des revendications 10 ou 11, dans lequel l'au moins un serveur secondaire (21, 22) comprend un premier serveur secondaire (21) et un deuxième serveur secondaire (22), dans lequel l'appareil client (40) est configuré de telle sorte que - en cas de défaillance du premier serveur (11) fournissant le service réseau à l'au moins un appareil client (40) et de disponibilité d'un autre serveur (12) des plusieurs serveurs primaires (11, 12) fournissant le service réseau à l'appareil client (40) - le premier serveur secondaire (21) est déterminé comme le deuxième serveur (21) parmi l'au moins un serveur secondaire (21, 22) en fonction des données de répartition de charge des blocs de données d'enregistrement de ressource de service, SRV, se rapportant au serveur secondaire (21, 22).

13. Système selon l'une des revendications 10 à 12, dans lequel l'appareil client (40) est configuré de telle sorte que le premier serveur (11) est déterminé parmi les plusieurs serveurs primaires (11, 12) en fonction des données de répartition de charge des blocs de données d'enregistrement de ressource de service, SRV, se rapportant aux plusieurs serveurs primaires (11, 12), dans lequel l'appareil client (40) est configuré de telle sorte que - en cas de défaillance du premier serveur (11) fournissant le service réseau à l'appareil client (40) et de disponibilité d'un autre serveur (12) des plusieurs serveurs primaires (11, 12) fournissant le service réseau à l'appareil client (40) et de disponibilité du deuxième serveur (21) pour une utilisation du service par l'appareil client (40) - le service réseau est fourni à l'appareil client (40) de telle sorte qu'une fraction des demandes de service réseau de l'appareil client (40) est traitée par le deuxième serveur (21), dans lequel la fraction est déterminée en fonction d'une valeur de répartition de charge se rapportant au premier serveur (11), dans lequel la fraction est en particulier déterminée en fonction d'une multiplication de la valeur de répartition de charge se rapportant au premier serveur (11) par une valeur de répartition de charge se rapportant au deuxième serveur (21) .

14. Programme informatique doté d'un code de programmation lisible par ordinateur, à l'aide duquel un procédé selon l'une des revendications 1 à 9 peut être mis en œuvre, lorsque le code de programmation lisible par ordinateur est exécuté sur un dispositif programmable.

15. Produit-programme informatique doté d'un code de programmation selon la revendication 14, enregistré sur un support d'enregistrement, à l'aide duquel un procédé selon l'une des revendications 1 à 9 peut être mis en œuvre, lorsque le code de programmation lisible par ordinateur est exécuté sur un dispositif programmable.
